(19) **Europäisches Patentamt**
**European Patent Office**
**Office européen des brevets**

(11) **EP 2 012 946 B1**

(12) **EUROPÄISCHE PATENTSCHRIFT**

(45) Veröffentlichungstag und Bekanntmachung des Hinweises auf die Patenterteilung:
**02.03.2011 Patentblatt 2011/09**

(51) Int Cl.:
*B21D 7/14* (2006.01)      *G01B 5/14* (2006.01)
*G01N 3/20* (2006.01)

(21) Anmeldenummer: **07724522.3**

(86) Internationale Anmeldenummer:
**PCT/EP2007/003592**

(22) Anmeldetag: **24.04.2007**

(87) Internationale Veröffentlichungsnummer:
**WO 2007/121985 (01.11.2007 Gazette 2007/44)**

(54) **VERFAHREN ZUM MASCHINELLEN ZUGUMFORMUNGSBIEGEN VON STÄBEN, INSBESONDERE VON ROHREN**

METHOD FOR THE MECHANICAL TENSILE BENDING OF BARS, MORE PARTICULARLY PIPES

PROCÉDÉ DE CINTRAGE SOUS TRACTION MÉCANIQUE DE BARRES, EN PARTICULIER DE TUBES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **24.04.2006   DE 102006019321**
**04.11.2006   DE 102006052057**

(43) Veröffentlichungstag der Anmeldung:
**14.01.2009   Patentblatt 2009/03**

(73) Patentinhaber: **RASI Maschinenbau GmbH**
**75428 Illingen (DE)**

(72) Erfinder: **RAPP, Heinrich**
**75447 Sternenfels-Diefenbach (DE)**

(74) Vertreter: **Twelmeier, Ulrich**
**Twelmeier Mommer & Partner**
**Westliche 56-68**
**75172 Pforzheim (DE)**

(56) Entgegenhaltungen:
**EP-A1- 0 338 944          EP-B1- 0 384 477**
**DE-A1- 10 336 550          DE-A1- 19 706 470**
**DE-U1-202005 010 145**

**Beschreibung**

Die Erfindung betrifft ein Verfahren zum maschinellen Zugumformungsbiegen von Stäben, insbesondere von Rohren, mit den im Oberbegriff des Anspruchs 1 angegebenen Merkmalen. Ein solches Verfahren ist aus der DE 197 06 470 A1 bekannt.

Die EP 0 384 477 offenbart ein Verfahren zum maschinellen Zugumformungsbiegen von Rohren mit Hilfe einer Biegemaschine, welche ein Biegewerkzeug hat, welches um eine Achse - die Biegeachse - drehbar ist. Eine Spannvorrichtung ist Teil des Biegewerkzeuges. In der Spannvorrichtung kann das zu biegende Rohr für den Biegevorgang eingespannt werden. An die Spannvorrichtung anschließend hat das Biegewerkzeug eine Mantelfläche, welche ein Abschnitt einer Rotationsfläche ist. Ein Ende dieser Rotationsfläche geht tangential in die Spannvorrichtung über.

Beim Zugumformungsbiegen wird das Biegewerkzeug um die Biegeachse um einen vorgegebenen Winkel geschwenkt. Dabei wird die Spannvorrichtung ebenfalls um die Biegeachse verschwenkt und zieht das Rohr hinter sich her. Damit der zum einen Ende aus der Spannvorrichtung herausragende hintere Abschnitt des Rohres beim Verschwenken der Spannvorrichtung nicht mit verschwenkt wird, ist ein Biegewiderlager vorgesehen, an welchem der hintere Abschnitt des Rohres anliegt. Durch das Zusammenwirken des schwenkenden Biegewerkzeuges mit dem Biegewiderlager wird der zu biegende Rohrabschnitt auf die Mantelfläche des Biegewerkzeugs gewickelt, deren Kontur die Gestalt des Bogens bestimmt, insbesondere dessen Krümmung bzw. Radius.

Da das Rohr nach dem Biegen etwas zurückfedert, genügt es nicht, das Biegewerkzeug um den für das Rohr vorgesehenen Biegewinkel zu schwenken, vielmehr muss das Biegewerkzeug um einen zusätzlichen kleinen Winkel, den Überbiegewinkel, geschwenkt werden, um die Rückfederung des Rohres zu kompensieren, so dass das Rohr nach dem Rückfedern um den Überbiegewinkel genau den gewünschten Biegewinkel (Soll-Biegewinkel) aufweist.

Die EP 0 384 477 B1 offenbart eine mit dem Biegewiderlager gekoppelte Messeinrichtung, die es erlaubt, den Überbiegewinkel zu bestimmen, während das Rohr in der Biegemaschine eingespannt ist. Die mit dem Biegewiderlager gekoppelte Messeinrichtung kann die Winkellage des an den Bogen anschließenden geraden hinteren Abschnitts dieses Rohres durch einen Mess-Taster erfassen, messen und dadurch den erforderlichen Überbiegewinkel bestimmen.

Der Biegeradius des Rohres wird durch die Krümmung der Mantelfläche des Biegewerkzeugs und durch die Rückfederung des Rohres bestimmt. Die Rückfederung hat zur Folge, dass der tatsächliche Radius des Bogens im Rohr größer ist als der von der Mantelfläche des Biegewerkzeugs vorgegebene Radius. Das Maß, um welches der tatsächliche Biegeradius größer ist als der vom Biegewerkzeug vorgegebene Radius, wird als die Radiusaufweitung bezeichnet. Sie hängt vor allem vom Werkstoff und von den Querschnittsabmessungen des Rohres, vom Radius des Biegewerkzeuges sowie vom Biegewinkel ab und beeinflusst die Maßhaltigkeit des gebogenen Rohres.

Die Maße des gebogenen Rohres werden von der Biegeaufgabe vorgegeben. Entscheidend für die Maßhaltigkeit eines gebogenen Rohres ist die Lage der beiden Endpunkte des Rohres und die Lage der Schnittpunkte der geraden Abschnitte des Rohres, welche paarweise einen Bogen begrenzen, nämlich die Schnittpunkte der Mittellinien der geraden Abschnitte des Rohres. Die Lage der Endpunkte des Rohres und der Rohrgeradenschnittpunkte hängt von der Radiusaufweitung ab. Die Lage der Rohrendpunkte zueinander hängt darüber hinaus von der im Verlauf des Biegevorgangs auftretenden Streckung des Rohres ab. Diese kann für das vordere Rohrende zu Null angesetzt werden, da der vor dem ersten Biegevorgang über die Spannvorrichtung hinausragende gerade Rohrabschnitt - der vordere gerade Rohrabschnitt - keine Streckung erfährt. Die Streckung beeinflusst aber die Lage des hinteren Endes des Rohres, indem sich die Streckungen, die beim Biegen jedes einzelnen Bogens auftreten, über das Rohr addieren und es verlängern, so dass der Abstand des hinteren Rohrendes von dem Rohrgeradenschnittpunkt, welcher dem zuletzt gebogenen Bogen zugeordnet ist, zu groß wird.

Aus der DE 197 06 470 A1 ist es bereits bekannt, bei einem Bogen eine Größe, die ein Maß für die durch das Zugumformungsbiegen hervorgerufene Radiusaufweitung des Bogens ist, zu messen, zu speichern und daraus mit einem Prozessor einen Überbiegewinkel zu errechnen.

Um den Einfluss der Radiusaufweitung und der Streckung des Rohres beim Biegen zu berücksichtigen, ist es ferner bekannt, mit dem zu biegenden Rohr vorab eine Anzahl von Probebögen zu biegen und das Ergebnis der Biegevorgänge anschließend von Hand oder in einer separaten Messmaschine zu vermessen. Auf der Grundlage der Messergebnisse werden dann die Vorschübe für die geraden Zwischenabschnitte und die Länge des Rohres schrittweise angepasst, um sich dem gewünschten Biegeergebnis anzunähern. Bisher ist es nötig, dafür ca. 5 Probebögen zu biegen, bis aus den daraus gewonnenen Erfahrungswerten die passende Einstellung der Biegemaschine für eine konkrete Biegeaufgabe gewonnen werden kann. Das erfordert geraume Zeit und kostet einige Meter Rohrabfall.

Der vorliegenden Erfindung liegt die Aufgabe zugrunde, einen Weg aufzuzeigen, wie der Aufwand des Standes der Technik für die probeweisen Biegevorgänge für die

Einstellung einer Biegemaschine zum Zugumformungsbiegen von Stäben vermindert und wie der Abfall verringert werden kann. Unter Stäben werden im Rahmen der vorliegenden Erfindung sowohl massive Stäbe als auch Hohlprofilstäbe verstanden, insbesondere Rohre, vor allem Rohre mit kreisförmigem Querschnitt.

Diese Aufgabe wird gelöst durch ein Verfahren mit den im Patentanspruch 1 angegebenen Merkmalen. Vorteilhafte Weiterbildungen der Erfindung sind Gegenstand der Unteransprüche.

Beim erfindungsgemäßen Verfahren zum maschinellen Zugumformungsbiegen von Stäben, insbesondere von Rohren, wird wie im Stand der Technik der Stab in eine Spannvorrichtung eingespannt. Die Spannvorrichtung unterteilt den Stab in einen vorderen Abschnitt, welcher in der Spannvorrichtung steckt und gegebenenfalls über diese vorsteht, und in einen hinteren Abschnitt, in welchem angrenzend an die Spannvorrichtung ein Bogen erzeugt werden soll. Damit das möglich ist, ist ein Biegewiderlager vorhanden, an welchem sich der gerade hintere Abschnitt des Stabes abstützen kann, wenn die Spannvorrichtung zum Durchführen des Biegevorganges verschwenkt wird. Die Spannvorrichtung zieht den hinteren Abschnitt des Stabes hinter sich her und am Biegewiderlager entlang, gegen welches der Stab mit der zum Biegen erforderlichen Kraft drückt. Dabei hängt die Länge, um welche das hintere Ende des Stabes gezogen wird, vom Biegewinkel, von der Krümmung des Bogens und von der Streckung des Stabes ab.

Erfindungsgemäß wird bei einem solchen Biegevorgang eine Größe gemessen, die ein Maß für die durch das Zugumformungsbiegen hervorgerufene Radiusaufweitung des Bogens des Stabes ist, und zwar während sich der Stab noch in der Biegemaschine befindet. Diese Größe oder eine davon abgeleitete Größe wird in einem Rechner gespeichert. Für folgende Biegevorgänge der gleichen Biegeaufgabe wird der Einfluss der Radiusaufweitung auf den Abstand benachbarter Stabgeradenschnittpunkte voneinander kompensiert, wenn die Biegeaufgabe mehrere Bögen im Stab vorsieht. Sieht die Biegeaufgabe nur einen einzigen Bogen im Stab vor, dann wird der Einfluss der Radiusaufweitung auf den Abstand zwischen den Stabenden und dem einzigen Stabgeradenschnittpunkt kompensiert. Im Falle, dass die Biegeaufgabe mehrere Bögen im Stab vorsieht, kann nicht nur der Einfluss der Radiusaufweitung auf den Abstand benachbarter Stabgeradenschnittpunkte voneinander kompensiert werden, sondern auch der Abstand zwischen den Stabenden und den ihnen benachbarten Stabgeradenschnittpunkten. Die Kompensation erfolgt jeweils durch Anpassen der Längen der zwischen je zwei einander benachbarten Bögen vorgesehenen geraden Stababschnitte und/oder durch Anpassen der Länge des geraden Anfangsabschnittes des Stabes und der Länge des Stabes insgesamt.

Unter einem Stabgeradenschnittpunkt wird der Schnittpunkt der Mittellinien der beiden an einen Bogen angrenzenden geraden Stababschnitte oder Rohrabschnitte verstanden. Liegen die beiden geraden Rohrabschnitte nicht in einer gemeinsamen Ebene, dann schneiden sie sich nicht; in diesem Fall kommt stattdessen der Schnittpunkt der Projektion der Mittellinien in eine gemeinsame Ebene in Betracht.

Bei einem geraden Endabschnitt des Stabes kann der Einfluss der Radiusaufweitung dadurch kompensiert werden, dass der gerade Endabschnitt - ausgehend von seiner Soll-Länge ohne Auftreten einer Radiusaufweitung - um einen Betrag

$$(1) \quad r_a \times \tan(\beta/2)$$

verkürzt wird, worin $r_a$ die durch Messung bestimmte oder aus einer Messung abgeleitete Radiusaufweitung und $\beta$ der tatsächliche Biegewinkel des an den Endabschnitt anschließenden Bogens ist. Die Verkürzung kann für die Länge des ersten geraden Abschnittes eines Stabes u. U. in zwei Schritten erfolgen, indem schon vor dem als erstes erfolgenden Probebiegen des ersten Bogens ein Teil der als Folge der Radiusaufweitung anzubringenden Korrektur auf der Grundlage einer Schätzung bei der Bemessung der Länge des ersten geraden Stababschnittes vorgenommen und der Stab für den ersten Biegevorgang entsprechend im Biegewerkzeug positioniert wird. Dabei sollte der Schätzwert so gewählt werden, dass der erste gerade Stababschnitt auf keinen Fall zu kurz ausfällt, weil dann der Stab nicht mehr zu gebrauchen wäre. Der Vorteil, vorab eine geschätzte Korrektur bei der Positionierung des Stabes für das Probebiegen vorzunehmen, liegt darin, dass nach dem Biegen die Länge des ersten geraden Stababschnittes nur noch um einen entsprechend kleineren Betrag gekürzt werden muss, um verwendbar zu sein.

Bei einem geraden Zwischenabschnitt des Stabes, der durch zwei Bögen begrenzt wird, kann der Einfluss der Radiusaufweitung dadurch kompensiert werden, dass der gerade Zwischenabschnitt des Stabes - ausgehend von seiner theoretischen Länge ohne Auftreten einer Radiusaufweitung - um einen Betrag

$$(2) \quad r_a \cdot (\tan(\beta_1/2) + \tan(\beta_2/2))$$

verkürzt wird, worin $r_a$ die durch Messung bestimmte Radiusaufweitung ist und $\beta_1$ und $\beta_2$ die tatsächlichen Biegewinkel der an den betreffenden geraden Stababschnitt angrenzenden Bögen sind. Streng genommen gilt der Ausdruck (2) nur für den Fall, dass die Radiusaufweitung nicht vom Biegewinkel abhängt. Ist die Radiusaufweitung jedoch eine Funktion $r_a(\beta)$ des Biegewinkels $\beta$ und soll diese Abhängigkeit nicht vernachlässigt, sondern berücksichtigt werden, wenn die Länge des Stabes verkürzt wird, um den Einfluss der Radiusaufweitung zu kompensieren, dann wird der Ausdruck (2) ersetzt durch den Ausdruck

$$(2a)\ r_a\,(\beta_1)\ ^*\ \tan\,(\beta_1/2) + r_a\,(\beta_2)\ ^*\ \tan\,(\beta_2/2).$$

Darin ist $r_a\,(\beta_1)$ die für den Biegewinkel $\beta_1$ bestimmte Radiusaufweitung und $r_a\,(\beta_2)$ die für den Biegewinkel $\beta_2$ bestimmte Radiusaufweitung.

Die Erfindung hat wesentliche Vorteile:

- Die bei einer Biegeaufgabe zu erwartende Radiusaufweitung kann bereits ermittelt werden, wenn in einem vorgegebenen Stab der erste Bogen mit einem bestimmten Radius gebogen wird. Die dabei auftretende Radiusaufweitung kann gemessen oder aus einer Messung abgeleitet werden. Ist die Radiusaufweitung erst einmal bestimmt worden, kann sie bei weiteren Biegevorgängen vorbeugend berücksichtigt werden, so dass man, wenn die Radiusaufweitung einmal bestimmt worden ist, gebogene Stäbe mit hoher Passgenauigkeit erreichen kann, die kleiner Nachbearbeitung mehr bedürfen. Das gilt insbesondere, wenn die Radiusaufweitung im wesentlichen unabhängig vom Biegewinkel ist.
- Die Qualität und Maßhaltigkeit von gebogenen Stäben, insbesondere von Rohren, kann noch in der Biegemaschine verbessert werden. Auch eine Maßkontrolle ist schon in der Biegemaschine möglich.
- Beim erstmaligen Biegen eines Stabes kann sich - wenn die tatsächliche Radiusaufweitung größer als die angenommene Radiusaufweitung ist - die Notwendigkeit ergeben, den hinteren geraden Stababschnitt, unter Umständen auch den vorderen geraden Stababschnitt, durch einen Trimmvorgang, z. B. durch Sägen, bei geringen Überlangen auch durch Schleifen, zu verkürzen. Bei weiteren Stäben des gleichen Stabtyps, die unter derselben Biegeaufgabe oder auch in anderer Geometrie gebogen werden, ist infolge der erfindungsgemäßen Kompensation ein weiteres Trimmen jedoch nicht mehr erforderlich.

- Der beim Trimmen anfallende Abfall ist vernachlässigbar.
- Schon der getrimmte erste Stab kann bestimmungsgemäß verwendet werden.
- Die ermittelte Radiusaufweitung des Stabes wird vom Rechner der Biegemaschine dazu benutzt, um die Länge der weiteren Stäbe gleichen Typs, die nach der gleichen Biegeaufgabe oder in anderen Geometrien zu biegen sind, so zu korrigieren, dass ein abschließender Trimmvorgang nicht mehr erforderlich ist, sondern die Stäbe nach dem Biegen weitgehend oder vollständig Sollmaß haben.
- Ist für einen bestimmten Stab die Radiusaufweitung für mehrere Biegeradien bestimmt worden, können Werte der Radiusaufweitung für Zwischenwerte des Biegeradius durch Interpolation und für Anschlusswerte des Biegeradius durch Extrapolation in brauchbarer Näherung errechnet werden. Für höhere Genauigkeitsansprüche können die genauen Zahlenwerte für die Radiusaufweitung bei unterschiedlichen Biegeradien und bei unterschiedlichen Biegewinkeln aber auch beim erstmaligen Biegen eines Bogens mit einem bestimmten Biegeradius bestimmt und unter diesem Biegeradius und weiteren Parametern, die die Biegeaufgabe beschreiben, z. B. unter dem Biegewinkel, gespeichert werden.
- Im Rechner lässt sich für das Biegen eines bestimmten Stabes auf diese Weise für unterschiedliche Biegeradien eine Kennlinie speichern, welche die Abhängigkeit der Radiusaufweitung vom Biegeradius angibt. Für Stäbe aus dem gleichen Material, aber mit unterschiedlichen Querschnittsabmessungen lassen sich eben solche Kennlinien aufnehmen und zu einem Kennlinienfeld zusammenführen, welches im Rechner abgespeichert ist und auf welches der Rechner zugreifen kann, um bei einer geänderten Biegeaufgabe die zu erwartende Radiusaufweitung vorab zu ermitteln.
- Trotz übereinstimmender Stababmessungen und übereinstimmender Werkstoffnummer können sich Stäbe, die aus unterschiedlichen Fertigungschargen stammen, beim Biegen unterschiedlich verhalten. Die Erfindung erlaubt es, das mit verhältnismäßig geringem Aufwand zu berücksichtigen. Wird erstmals ein Stab, für dessen Abmessungen und für dessen Biegeverhalten Zahlenwerte gespeichert sind, aus einer neuen Charge gebogen, wird die dabei auftretende Radiusaufweitung bestimmt und mit dem entsprechenden, für einen gleichen Biegewinkel bereits gespeicherten Zahlenwert aus einer oder mehreren vorhergehenden Chargen verglichen. Bei hinreichender Übereinstimmung mit einem bereits gespeicherten entsprechenden Zahlenwert können die bereits gespeicherten Zahlenwerte auch für die neue Charge verwendet werden. Andernfalls können die bereits gespeicherten Zahlenwerte im Verhältnis des einen neu ermittelten Zahlenwertes zu dem ihm entsprechenden bereits gespeicherten Zahlenwert im Wege der Interpolation oder Extrapolation abgeändert und als Satz von Zahlenwerten für eine oder mehrere Biegeaufgaben mit Stäben der neuen Charge gespeichert werden.
- Je mehr unterschiedliche Biegeaufgaben im Lauf der Zeit auf der Biegemaschine durchgeführt werden, umso mehr Sätze von Zahlenwerten sammeln sich im Speicher der Steuerung der Biegemaschine an und bilden ein wertvolles Know How für den Betreiber der Biegemaschine, welches es ihm erleichtert, die Durchführbarkeit von Biegeaufgaben, die an ihn herangetragen werden, rasch zu klären und Korrekturwerte für die Länge der Stäbe und für die Länge ihrer geraden Abschnitte zwischen je zwei Bögen zu finden.

• Soweit ein Anwender mehrere Biegemaschinen in seinem Unternehmen einsetzt, können Zahlenwerte, die erfindungsgemäß auf einer der Biegemaschinen gewonnen wurden, der numerischen Steuerung der übrigen Biegemaschinen zur Verfügung gestellt und in deren Speicher übernommen werden.

• Das erfindungsgemäße Verfahren ist anwendbar auf Biegeaufgaben, bei welchen nur ein einziger Bogen im Stab gebogen wird, und auf Biegeaufgaben, welche mehrere getrennte Bögen in einem Stab vorsehen.

Eine konkrete Biegeaufgabe kann durch folgende Parameter charakterisiert werden: Werkstoff des Stabes, Charge der Stäbe, Innendurchmesser des Rohres, Außendurchmesser des Stabes oder Rohres, Wandstärke des Rohres, Querschnitt eines Profilstabes, lichter Querschnitt eines Hohlprofilstabes, Biegeradius, Biegewinkel, Länge der an einen Bogen anschließenden geraden Stababschnitte, die Winkel zwischen den Biegeebenen unterschiedlicher Bögen und vor allem der Abstand der Stabgeradenschnittpunkte voneinander und der Abstand der Stabenden von den ihnen benachbarten Stabgeradenschnittpunkten.

Unter diesen Parametern oder unter einem Teil von ihnen können die das Biegeverhalten widerspiegelnden Zahlenwerte im Speicher abgelegt und nach Bedarf aufgerufen werden, bei einer CNC-Biegemaschine auch selbsttätig.

Die Kompensation des Einflusses der Radiusaufweitung auf das Biegeergebnis mit Hilfe des Tangens des halben Biegewinkels lässt sich nicht für beliebig große Biegewinkel durchführen, weil mit Annäherung an den Biegewinkel 180° der Tangens des halben Biegewinkels gegen Unendlich strebt. Zweckmäßigerweise wird diese Art der Kompensation deshalb nur für Biegewinkel durchgeführt, die nicht größer als 170° sind. Besonders gut ist die Kompensation der Radiusaufweitung über den Tangens des halben Biegewinkels für Biegewinkel bis zu 120° und bis zu 140°. Es gibt jedoch auch Anwendungen, bei denen es für die Frage der Maßhaltigkeit nicht auf die Lage der Stabgeradenschnittpunkte ankommt, sondern auf die Lage des Scheitelpunktes eines Bogens, zum Beispiel bei einem Handlauf einer Treppe oder Leiter. In einem solchen Fall kann es genügen, auch bei größeren Biegewinkeln von z. B. über 160° die an den Bogen angrenzenden geraden Abschnitte jeweils nur um die Radiusaufweitung zu kürzen.

Vorzugsweise wird die Radiusaufweitung dann bestimmt, wenn eine bestimmte Biegeaufgabe erstmalig durchgeführt wird, insbesondere dann, wenn erstmals ein Bogen, der zu einer bestimmten Biegeaufgabe gehört, in einen vorgegebenen Stab gebogen wird. Soweit man die Radiusaufweitung als im Wesentlichen unabhängig vom Biegewinkel annehmen kann, kommt es auf die Größe des Biegewinkels nicht an, so dass bereits mit dem ersten Bogen, der in ein erstmals in die Biegemaschine gebrachten Stabtyp gebogen wird, die Radiusaufweitung bestimmt werden kann.

In einem vereinfachten Verfahren kann angenommen werden, dass die Radiusaufweitung vom Biegewinkel unabhängig ist. Schon mit dieser vereinfachenden Annahme lässt sich der Einfluss der Radiusaufweitung auf den Abstand benachbarter Stabgeradenschnittpunkte voneinander und/oder auf den Abstand zwischen den Stabenden und den ihnen benachbarten Stabgeradenschnittpunkten in einem solchen Ausmaß kompensieren, dass erfindungsgemäß gebogene Stäbe, insbesondere erfindungsgemäß gebogene Rohre, eine signifikant verbesserte Maßhaltigkeit aufweisen. Tatsächlich beobachtet man jedoch eine Abhängigkeit der Radiusaufweitung vom Biegewinkel. Vorzugsweise wird das erfindungsgemäße Verfahren deshalb so weitergebildet, dass bei der Kompensation des Einflusses der Radiusaufweitung auf den Abstand benachbarter Stabgeradenschnittpunkte voneinander und/oder auf den Abstand zwischen den Stabenden und den ihnen benachbarten Stabgeradenschnittpunkten eine Abhängigkeit der Radiusaufweitung von dem Biegewinkel berücksichtigt wird. Die Berücksichtigung kann auf unterschiedliche Weise erfolgen. Die genauesten Ergebnisse erreicht man, wenn man für jeden Biegewinkel, der bei einer Biegeaufgabe auftritt, die zugehörige Radiusaufweitung misst und speichert, z. B. als eine Folge von diskreten Messpunkten auf einer die Abhängigkeit der Radiusaufweitung vom Biegewinkel wiedergebenden Kennlinie. Es hat sich gezeigt, dass die Radiusabweichung eine fallende Kennlinie hat, d. h., die Radiusaufweitung nimmt mit zunehmendem Biegewinkel ab. Der Zusammenhang ist im allgemeinen nicht linear; die Steigung der Kennlinie nimmt mit zunehmendem Biegewinkel ebenfalls ab. Das bedeutet, dass sich die Radiusaufweitung im Bereich kleinerer Biegewinkel stärker mit dem Biegewinkel ändert als im Bereich größerer Biegewinkel, so dass der Verlauf der Kennlinie Ähnlichkeit mit einer Hyperbel aufweist.

In einer vorteilhaften Weiterbildung der Erfindung wird die Abhängigkeit der Radiusaufweitung vom Biegewinkel vereinfachend als linear angenommen, und zwar vorzugsweise in der Weise, dass mehrere aneinander anschließende Bereiche von Biegewinkeln gebildet werden, wobei in jedem dieser Bereiche die Abhängigkeit der Radiusaufweitung vom Biegewinkel individuell linearisiert wird. In jedem der so gewählten Biegewinkelbereiche wird somit vorzugsweise ein linearer Zusammenhang zwischen der Radiusaufweitung und dem Biegewinkel angenommen, jedoch mit unterschiedlicher Steigung in den verschiedenen Winkelbereichen. Vorzugsweise werden die Biegewinkel in drei bis fünf Biegewinkelbereiche eingeteilt, welche aneinander anschließen. Gute Ergebnisse erzielt man bereits mit einer Einteilung in drei Biegewinkelbereiche, nämlich in einen ersten Biegewinkelbereich von 0° bis 60°, in einen zweiten Biegewinkelbereich von 60° bis 120°, und in einen dritten Biegewinkelbereich von über 120°, z. B. von 120° bis 180°. In jedem dieser drei Bereiche nimmt man den Zusammenhang zwischen der Radiusaufweitung und dem Biegewinkel als linear an, wobei die Steigung der Kennlinie im Bereich von 0° bis 60° am größten und oberhalb von 120° am kleinsten ist. Obwohl die Kennlinie im Bereich von 0° bis 60° am steilsten ist, kommt man mit der Linearisierung doch zu guten Ergebnissen, weil die Radiusaufweitung mit dem Tangens des halben Biegewinkels gewichtet in den Abstand benachbarter Stabgeradenschnittpunkte voneinander bzw. in den Abstand zwischen den Stabenden und den ihnen benachbarten Stabgeradenschnittpunkten eingeht. Bei Biegewinkeln von nicht mehr als 60° ist der Tangens des halben Biegewinkels deutlich kleiner als 1 und fällt bis zum Biegewinkel 0 annähernd linear auf 0 ab. Bei Biegewinkeln über 120° steigt der Tangens des halben Biegewinkels zwar mit zunehmendem Biegewinkel deutlich an, doch ist in diesem Bereich zum Ausgleich die Radiusaufweitung verhältnismäßig gering und annähernd konstant.

Ermittelt man in jedem der linearisierten Biegewinkelbereiche einen Messwert für die Radiusaufweitung, kommt man zu sehr guten Ergebnissen, was die Maßhaltigkeit der gebogenen Rohre bzw. Stäbe betrifft, weil man bereits aus einer einzigen Messung der Radiusaufweitung die anderen, im gleichen ausgewählten Biegewinkelbereich liegenden Radiusaufweitungen mit hinreichender Genauigkeit prognostizieren kann. Soweit zu biegende Stäbe oder Rohre ähnliche mechanische Eigenschaften haben, kann man auch einen ähnlichen Verlauf der Kennlinie annehmen, welche die Abhängigkeit der Radiusaufweitung vom Biegewinkel angibt, so dass bereits aus einer einzigen Messung der Radiusaufweitung bei einem bestimmten Biegewinkel eine Prognose über die Radiusaufweitung bei den anderen Biegewinkeln möglich ist, auch wenn diese nicht im selben linearisierten Biegewinkelbereich liegen. Bei einem Stab, der ähnliche mechanische Eigenschaften hat wie ein Stab, für den bereits eine Kennlinie gespeichert ist, welche die Abhängigkeit der Radiusaufweitung vom Biegewinkel angibt, kann man den ersten Bogen mit der Korrektur biegen, die sich aus der bereits vorhandenen Kennlinie ergibt, und das Ergebnis mit dem erwarteten Wert vergleichen. Zeigt sich eine Abweichung, kann man die bereits gespeicherte Kennlinie um die Abweichung parallel zu sich selbst verschieben und als Kennlinie für die neue Biegeaufgabe speichern. Den zweiten Bogen biegt man dann unter Verwendung der neuen Kennlinie. Ergibt sich dann wieder eine Abweichung vom Erwartungswert der Radiusaufweitung, kann man die Steigung der Kennlinie anpassen, nämlich auf der Grundlage der bereits gemessenen Radiusabweichungen für zwei verschiedene Biegewinkel.

Ist für einen Stab, z. B. für ein Rohr, in welchem mehrere Bögen gebildet werden sollen, ein erster Bogen gebildet worden und die zugehörige Radiusaufweitung ermittelt worden, und hat der nächste zu bildende Bogen einen vom ersten Bogen nicht zu stark abweichenden Biegewinkel, dann kann man für den zweiten Bogen die selbe Radiusaufweitung wie für den ersten Bogen annehmen. Je größer die Abweichung des Biegewinkels des zweiten Bogens von dem Biegewinkel des ersten Bogens ist, desto sinnvoller wird es, für die Radiusaufweitung, welche beim zweiten Bogen auftritt, eine Prognose abzugeben, welche die Abhängigkeit der Radiusaufweitung vom Biegewinkel angemessen berücksichtigt, wie es vorstehend beschrieben wurde.

Die Radiusaufweitung kann für eine ausgewählte Biegeaufgabe auf unterschiedliche Weise bestimmt werden. Eine erste Möglichkeit besteht darin, die Radiusaufweitung $r_a$ für den Stab mit einer Vorschubeinrichtung zu messen, welche mit einem Weggeber gekoppelt ist. Eine solche Vorschubeinrichtung ist in einer numerisch gesteuerten Biegemaschine für das Zugumformungsbiegen regelmäßig vorhanden. Es ist ein Vorteil der Erfindung, dass diese Vorschubeinrichtung auch für Zwecke der Erfindung mitbenutzt werden kann. Das Bestimmen der Radiusaufweitung mit Hilfe der Vorschubeinrichtung erfolgt vorzugsweise so, dass nach dem Biegen eines Bogens bei vom Stab abgekoppelter Vorschubeinrichtung das Biegewiderlager vom Stab entfernt wird. Die Folge davon ist, dass der Stab infolge der Radiusaufweitung auffedert. Anschließend wird die Spannvorrichtung, die noch geschlossen ist, soweit zurückgeschwenkt, bis der hintere, gerade Stababschnitt parallel zu seiner Ausgangslage vor dem Biegen liegt. Die Lage des hinteren Endes des Stabes wird dann gemessen und mit der Lage verglichen, die das hintere Ende des Stabes ohne eine Radiusaufweitung eingenommen hätte; das ist die Lage, die das hintere Ende des Stabes hatte, als es um den Sollwinkel gebogen war, aber dem Biegewiderlager noch unter Spannung anlag und von der Vorschubeinrichtung gehalten war. In der Vorschubeinrichtung kann das Stabende jeweils eine Referenzposition einnehmen, z.B. an einem in der Vorschubeinrichtung ausgebildeten Anschlag für das hintere Ende des Stabes, so dass der Unterschied der Positionen der Vorschubeinrichtung vor dem Auffedern und erneuten Ausrichten des geraden hinteren Stababschnittes und nach dem Auffedern und erneuten Ausrichten des geraden hinteren Stababschnittes gemessen werden kann, nämlich durch den Weggeber, welcher mit der Vorschubeinrichtung gekoppelt ist. Teilt man die vom Weggeber gelieferte Positionsdifferenz durch den Sinus des Biegewinkels, erhält man die Radiusaufweitung $r_a$. Schwenkt man den Stab vor dem Messen der Lage des hinteren Endes des Stabes nicht in eine zu seiner Ausgangslage parallele Lage zurück, dann misst man einen Lagefehler, der mit dem Überbiegewinkel und der Länge des hinteren Stababschnittes zunimmt. Bei kürzeren Stababschnitten erhält man trotzdem einen brauchbaren Messwert für die Lage des hinteren Stababschnittes und damit für den tatsächlichen Vorschub beim Biegen des Rohres. Außerdem ist es möglich, das Unterlassen der Schrägstellung durch eine Positionskorrektur zu kompensieren, die für kleine Überbiegewinkel $\Delta\beta$ zu $L \times \sin^2\Delta\beta$ angesetzt werden kann, worin L die Länge des geraden hinteren Stabschenkels ist, welcher an den als letztes zu biegenden Bogen anschließt.

Eine andere Möglichkeit, die Radiusaufweitung $r_a$ zu messen, besteht darin, nach dem Biegen eines Bogens die Spannvorrichtung mit dem eingespannten Stab, dessen hinteres Ende von der Vorschubeinrichtung entkoppelt ist, soweit zurückzuschwenken, dass der hintere gerade Stababschnitt eine Lage parallel zu seiner Ausgangslage vor dem Biegen des Bogens einnimmt. Um das zu ermöglichen, wird das Biegewiderlager ein Stück weit vom Stab entfernt. Durch Messen des Abstandes des hinteren geraden Abschnittes des Stabes von seiner ursprünglichen Lage vor dem Biegen erhält man eine Größe, die ein Maß für die Radiusaufweitung ist. Die Radiusaufweitung erhält man aus dem gemessenen Abstand, indem man den gemessenen Abstand mit dem Faktor 1/(1-cosß) multipliziert, wobei β der Biegewinkel ist.

Die durch die Radiusaufweitung verursachte Verlagerung des hinteren geraden Stababschnittes kann man mit Hilfe des Biegewiderlagers messen, wenn dessen Verstellantrieb mit einem Weggeber gekoppelt ist. Eine andere Möglichkeit besteht darin, das Biegewiderlager mit einer gesonderten Längenmesseinrichtung zu versehen und mit dieser aus einer fest vorgegebenen Position des Biegewiderlagers heraus die Lage des geraden, hinteren Abschnittes des Stabes vor dem Biegevorgang und nach dem Biegevorgang, und zwar nach der Neuausrichtung des hinteren geraden Abschnittes, zu messen und daraus die Differenz zu bestimmen. Diese Funktion der Längenmesseinrichtung kann mit Vorteil kombiniert werden mit einem Messlineal, mit welchem gemäß der EP 0 384 477 B1 der erforderliche Überbiegewinkel bestimmt werden kann.

Eine weitere Möglichkeit, die Radiusaufweitung $r_a$ zu bestimmen, besteht darin, nach dem Biegen eines Bogens die Spannvorrichtung um den Überbiegewinkel zurückzuschwenken, die Spannvorrichtung zu öffnen und in der Spannvorrichtung die Auffederung des Bogens zu messen, insbesondere mit Hilfe eines in die Spannvorrichtung integrierten Messfühlers.

Eine weitere Möglichkeit zur Bestimmung der Radiusaufweitung $r_a$ besteht darin, die Spannvorrichtung nach dem Biegen eines Bogens zu öffnen, sie in ihre Ausgangslage zurückzuschwenken und mit Hilfe der vorhandenen Vorschubeinrichtung den Stab aus der Spannvorrichtung heraus zu einem an der Biegemaschine vorgesehenen Längenmessgerät vorzuschieben. Mit diesem wird der Abstand des Stabanfangs vom ersten Stabgeradenschnittpunkt gemessen, die Differenz zur Länge des geraden Stababschnittes gebildet, davon der halbe Stabdurchmesser abgezogen und das Ergebnis durch den Tangens des halben Biegewinkels geteilt. Das Ergebnis ist der aufgeweitete Radius

$$(3)\ R = R_m + r_a,$$

worin $R_m$ der auf die Mittellinie des Stabes bezogene Radius der Mantelfläche des Biegewerkzeugs ist, um welche der Stab gebogen wird, und worin $r_a$ die Radiusaufweitung ist, welche sich daraus zu

$$(4)\ r_a = R - R_m$$

ergibt.

Danach kann der Stab, unter Berücksichtigung des bereits erfolgten Vorschubes mit Hilfe der Vorschubeinrichtung, mit welcher ein Weggeber gekoppelt ist, für den nächsten Biegevorgang korrekt positioniert werden.

Eine weitere Möglichkeit, die Radiusaufweitung $r_a$ zu bestimmen, besteht bei einem Stab mit zwei einander benachbarten Bögen darin, den Abstand der Stabgeradenschnittpunkte zu messen, die diesen beiden Bögen zugeordnet sind, und davon die Länge des dazwischen liegenden geraden Stababschnitts sowie den halben Stabdurchmesser abzuziehen. Das Ergebnis wird für jeden der beiden Bögen durch den Tangens des halben Biegewinkels des betreffenden Bogens geteilt und ergibt für den betreffenden Bogen den aufgeweiteten Radius nach Gleichung (3) und daraus die Radiusaufweitung nach Gleichung (4). Wenn die Radiusaufweitung $r_a$ nicht vom Biegewinkel abhängt, liefert die Gleichung (4) für beide Bögen dieselbe Radiusaufweitung. Hängt die Radiusaufweitung jedoch vom Biegewinkel ab, kann die Gleichung (4) für die Radiusaufweitung unterschiedliche Werte liefern.

Eine weitere Möglichkeit, die Radiusaufweitung $r_a$ zu bestimmen, besteht darin, den tatsächlichen Biegeradius in der Biegeebene (das ist die Ebene, in welcher die Mittellinie des Bogens liegt) entweder auf der Bogeninnenseite oder auf der Bogenaußenseite mittels eines 3-Punkt-Meßgerätes zu messen, welches der Biegemaschine zugeordnet ist. Ein solches 3-Punkt-Meßgerät hat z. B. drei Taststifte, welche die Kontur des Bogens in der Biegeebene abtasten. Aus der Länge der Sehne (das ist der Abstand der beiden äußeren Taststifte) und aus der Höhe des Bogens über der Sehne, der mit dem mittleren Taststift gemessen wird, kann der tatsächliche Innenradius bzw. der Außenradius des Bogens berechnet werden. Addiert man zum Innenradius des Bogens den halben Stabdurchmesser bzw. subtrahiert man vom Außenradius des Bogens den halben Stabdurchmesser, dann erhält man den tatsächlichen Radius des Bogens, bezogen auf die Mittellinie des Bogens. Daraus ergibt sich als Radiusaufweitung $r_a$ die Differenz zwischen dem tatsächlichen Radius und dem Soll-Biegeradius.

Besonders günstig ist es, die Radiusaufweitung rechnerisch aus dem für den jeweiligen Stabtyp nötigen Überbiegewinkel zu bestimmen. Der Überbiegewinkel muß ohnehin ermittelt werden, wenn ein Stab von bestimmtem Typ erstmals gebogen werden soll. Eine elegante Methode zur Bestimmung des Überbiegewinkels offenbart die EP 0 384 477 B1, worauf wegen weiterer Einzelheiten verwiesen wird. Für einen bestimmen Biegeradius $R_m$, bezogen auf die Mittellinie des Stabes, insbesondere eines Rohres, erhält man die Radiusaufweitung $r_a$ in brauchbarer Näherung zu

$$(5) \qquad r_a = R_m \, (\Delta\beta/\beta)$$

worin $\beta$ der Soll-Biegewinkel und $\Delta\beta$ der Überbiegewinkel ist. Ist der bzw. sind die Überbiegewinkel für einen Stabtyp einmal bestimmt, kann daraus die Radiusaufweitung durch eine einfache Rechnung für jede Biegeaufgabe ermittelt und bei der Festlegung der Länge der geraden Stababschnitte berücksichtigt werden.

Als Mittellinie des Stabes oder Rohres kommt dessen neutrale Faser bzw. Längsmittellinie in Betracht.

Mit größerer Genauigkeit als mit der Gleichung (5) kann man die Radiusaufweitung $r_a$ berechnen, wenn man berücksichtigt, dass der Zusammenhang zwischen dem Überbiegewinkel $\Delta\beta$ und dem Biegewinkel $\beta$ weitgehend linear ist und weitgehend durch eine Gerade - die Überbiegegerade - dargestellt wird, welche allerdings nicht durch den Nullpunkt des Koordinatensystems mit den Koordinaten $\Delta\beta$ und $\beta$ geht, sondern bei $\beta = 0$ einen Offset k hat:

$$(6) \; \Delta\beta = M * \beta + k$$

worin M die Steigung der Überbiegegerade ist und k ein Korrekturwert ist, welcher die elastische Rückfederung angibt, nämlich den Winkel, um welchen der Stab elastisch gebogen werden kann. Geht man mit der Gleichung (6) in die Gleichung (5), dann ergibt sich für die Radiusaufweitung die Gleichung

$$(7) \; r_a = R_m \; ((M\beta + k)/\beta).$$

Noch genauere Ergebnisse erhält man aus der Gleichung

$$(8) \; r_a = R_m \; ((M\beta + k)/\beta) * F + Z,$$

welche sich von der Gleichung (7) durch einen Korrekturfaktor F und durch einen Korrekturadditor Z unterscheidet. F und Z können empirisch bestimmt werden, indem man zu Beginn einer Biegeaufgabe die Rückfederung und die Radiusaufweitung für zwei verschiedene Biegewinkel empirisch bestimmt, wobei die beiden Biegewinkel vorzugsweise um wenigstens 20° auseinander liegen sollten.

Der konstante Korrekturwert k kann auch aus der gemessenen Radiusaufweitung berechnet werden. Eleganter ist es, die Radiusaufweitung für zwei verschiedene Biegewinkel an ein und demselben Bogen zu bestimmen, indem dieser in zwei Schritten gebogen wird.

Für eine Bestimmung des Überbiegewinkels und der Radiusaufweitung nach Gleichung (5) kann bei Vernachlässigung der Abhängigkeit der Radiusaufweitung vom Biegewinkel die gewünschte Information bereits aus dem Verhalten des Rohres beim Biegen eines kleineren Teilbogens gewonnen und beim Fertigbiegen des ersten Bogens berücksichtigt werden. Als Teilbogen könnte ein solcher mit einem Referenz-Biegewinkel, z.B. 20°, verwendet werden. Das kann den Vergleich mit Werten, die aus anderen Biegeaufgaben gewonnen wurden, und die Übertragung auf andere Biegeaufgaben vereinfachen. Will man die Radiusaufweitung jedoch nach Gleichung (7) genauer bestimmen, ermittelt man nach Gleichung (6) den Überbiegewinkel beispielsweise zum einen für den ersten Teilbogen und zum anderen in einem zweiten Schritt für den gesamten Bogen und kann dann aus zwei Gleichungen des Typs (6) sowohl die Radius-aufweitung $r_a$ als auch den Korrekturwert k berechnen.

Im Ergebnis erhält man auf diese Weise für einen bestimmten Biegeradius $R_m$ sowohl den Überbiegewinkel $\Delta\beta$ für den gesamten Biegebereich von z. B. 0-180° als auch die zu erwartende Radiusaufweitung $r_a$ mit hoher Genau-

igkeit.

Es ist also möglich, mit dem Biegen von zwei Bögen oder mit dem Biegen eines Bogens in zwei oder mehr Schritten das Biegeverhalten eines Stabes, insbesondere eines Rohres, komplett zu entschlüsseln und daraus die wichtigsten geometrierelevanten Materialeigenschaften zu gewinnen, mit denen die Biegemaschine so eingestellt werden kann, dass sie maßhaltig gebogene Stäbe liefert, die keinerlei Nachbearbeitung mehr erfordern. Besonders vorteilhaft ist es, die Abhängigkeit der Radiusaufweitung $r_a$ von dem Biegewinkel $\beta$ durch schrittweises Biegen eines Bogens zu bestimmen, indem nach jedem Biegeschritt die Radiusaufweitung alleine oder die Radiusaufweitung und die Rückfederung für den bis dahin erreichten Biegewinkel gemessen, registriert und dann der Bogen um einen nächsten Schritt weitergebogen wird. Auf die registrierten Werte der Radiusaufweitung und auf eine damit gebildete Radiusaufweitungskennlinie, welche die Abhängigkeit der Radiusaufweitung vom Biegewinkel angibt, kann die Steuerung einer Biegemaschine zugreifen, wenn mit dem Stab oder mit einem sich beim Biegen gleich oder ähnlich verhaltenden Stab ein anderer Bogen mit gleichem Biegeradius $R_m$ und mit einem Biegewinkel zu biegen ist, der im Bereich der Biegewinkel liegt, für welche die Radiusaufweitung ermittelt und gespeichert wurde, so dass sie - ggf. im Wege der Interpolation - beim Biegen des anderen Bogens berücksichtigt werden kann. Diese Vorgehensweise ist sehr rationell.

Die Messungen dazu erfolgen vorzugsweise in der Biegemaschine, könnten aber auch außerhalb der Biegemaschine erfolgen und dem Rechner, mit welchem die Biegemaschine gesteuert wird, von Hand eingegeben werden.

Durch Berücksichtigen der Radiusaufweitung gelingt es, den Abstand der Stabgeradenschnittpunkte voneinander und den Abstand des Stabanfangs vom benachbarten Stabgeradenschnittpunkt genau zu erhalten. Der Abstand zwischen dem Ende des Stabes und dem ihm benachbarten Stabgeradenschnittpunkt wird jedoch nicht nur durch die Radiusaufweitung beeinflusst, sondern auch durch die beim Biegen eines jeden Bogens auftretende Streckung des Stabes, welche zusammen mit der von der Radiusaufweitung herrührenden Verkürzung der Bögen dazu führt, dass ein Stab, welcher unter Vernachlässigung von Radiusaufweitung und Streckung für eine bestimmte Biegeaufgabe zugeschnitten wurde, nach dem Biegen zu lang wäre, würde er nicht um die zu erwartenden Bogenverkürzungen und um die zu erwartenden Streckungen des Stabes verkürzt zugeschnitten. Deshalb ist es vorteilhaft, um einen besonders maßhaltigen gebogenen Stab zu erhalten, beim Zuschneiden des Stabes zusätzlich zu einer aus der Radiusaufweitung herrührenden Korrektur auch eine Korrektur der Länge des Stabes im Hinblick auf die zu erwartende Streckung vorzunehmen, um zu vermeiden, dass der letzte gerade Schenkel des gebogenen Stabes zu lang wird. Die vorliegende Erfindung ermöglicht eine solche Korrektur elegant und mit geringstem Aufwand.

Bevor man einen Stab erstmals biegt, wird vorzugsweise die sich aus der Radiusaufweitung und Streckung ergebende Längung des Stabes vorab nach Erfahrungswerten abgeschätzt, und zwar sicherheitshalber so, dass der Stab nach dem Biegen keinesfalls zu kurz, sondern allenfalls zu lang ist, so dass er, falls nötig, abschließend noch gekürzt werden kann. Sicherheitshalber sollte man also eher eine zu kleine Radiusaufweitung und eine zu kleine Streckung annehmen und eine sich danach noch ergebende Überlänge des gebogenen Stabes durch Trimmen, d.h. durch Abschneiden, entfernen. Bei Annahme einer verschwindenden Radiusaufweitung und eines Streckfaktors von 1 ist der Stab nach einem Biegevorgang nie zu kurz.

Die Streckung kann aus dem Überbiegewinkel $\Delta\beta$ oder aus der Radiusaufweitung $r_a$ abgeleitet werden. Ein gut brauchbarer Zahlenwert für die absolute Streckung S, welche beim Biegen eines Bogens auftritt, ist der Wert

$$(9) \quad S = ((R_m\, 2\pi(\beta+\Delta\beta))/360) \; - \; \Delta V$$

worin $\Delta V$ die Strecke ist, um welche das hintere Ende des Stabes gezogen wird, wenn dieses mit dem Soll-Radius $R_m$ (bezogen auf die Mittellinie des Stabes) um den Soll-Biegewinkel $\beta$ plus den Überbiegewinkel $\Delta\beta$ gebogen wird, gemessen vor der Rückfederung um den Überbiegewinkel. Die Strecke $\Delta V$, um welche das hintere Ende des Stabes dabei gezogen wird, erhält man problemlos von dem Weggeber, welcher der Vorschubeinrichtung für den Stab zugeordnet ist. Anstatt im Rechner die absolute Streckung S als Länge zu speichern, kann man auch einen Streckungsfaktor SF speichern, der das Verhältnis der tatsächlichen Bogenlänge mit Streckung zur theoretischen Bogenlänge ohne Streckung eines Bogens im Stab angibt. Für den in der Gleichung (7) behandelten Fall kann man als Streckungsfaktor SF die Größe

$$(10) \quad SF = (\Delta V \times 360°) / (2\pi(\beta+\Delta\beta)R_m)$$

verwenden.

Alternativ kann die Streckung auch mit Hilfe der Radiusaufweitung bestimmt werden. In diesem Fall erhält man die Streckung in guter Näherung aus der Formel

$$(11) \quad S = ((R_m + r_a)\, 2\pi\beta/360) - \Delta V,$$

in welcher $r_a$ die Radiusaufweitung und $\Delta V$ die Strecke ist, um welche das hintere Ende des Stabes infolge des Biegens des Bogens vorbewegt wurde, gemessen vor dem Rückfedern des Stabes. Als Streckfaktor SF kann man in diesem Fall die Größe

$$(12) \quad SF = (\Delta V \times 360°)\, /\, (2\pi\beta(R_m + r_a))$$

verwenden.

Eine vereinfachte Möglichkeit, die Streckung rechnerisch zu berücksichtigen, gibt die Gleichung

$$(13) \quad S = (R_m\, 2\pi\beta/360) - \Delta V$$

an. Diese vereinfachte Gleichung lässt den Einfluss der Radiusaufweitung auf die Streckung unberücksichtigt. Aus (13) kann man als Streckfaktor

$$(14) \quad SF = (360° \times \Delta V)/(2\pi\beta R_m)$$

ableiten. In diesem Fall ist der Streckfaktor mit der theoretischen Bogenlänge ohne Radiusaufweitung zu multiplizieren, um einen Zahlenwert für die absolute Streckung zu erhalten.

Folglich kann aus den vorgegebenen Daten der Biegeaufgabe und aus einer einfachen Wegmessung an der Vorschubeinrichtung, unter Berücksichtigung des Überbiegewinkels bzw. der Radiusaufweitung für jeden Bogen eine zu erwartende Streckung bequem vorab ermittelt werden. Da der Überbiegewinkel bzw. die Radiusaufweitung bereits beim ersten Biegevorgang ermittelt bzw. aus dem ersten Biegevorgang abgeleitet werden kann, kann mit Hilfe des Soll-Biegewinkels $\beta$ und des Soll-Biegeradius $R_m$, die durch die jeweilige Biegeaufgabe vorgegeben sind, für jeden Bogen die zu berücksichtigende Streckung S leicht errechnet und beim Zuschneiden des Stabes berücksichtigt werden. Es hat sich gezeigt, dass - wenn die Streckung für einen Biegewinkel ermittelt wurde - sie einfach im Verhältnis der Biegewinkel auch für andere Biegewinkel errechnet werden kann.

Die Streckung bzw. der Streckfaktor kann auch außerhalb der Biegemaschine an einem gebogenen Stab bestimmt werden, indem dieser nach dem Biegen wie folgt vermessen wird: Zunächst werden die Abstände der im Verlauf des Stabes einander benachbarten Stabgeradenschnittpunkte sowie der Abstand des Stabanfangs zum ersten Stabgeradenschnittpunkt und der Abstand des Stabendes zum letzten Stabgeradenschnittpunkt gemessen. Diese Längen werden mit $L_1$ bis Ln bezeichnet. n ist der Zählindex der einzelnen geraden Abschnitte des gebogenen Stabes, wobei die Anzahl der Bögen um 1 kleiner ist als die Anzahl der geraden Abschnitte.

Aus diesen Längen können unter Zuhilfenahme der ermittelten Radiusaufweitung $r_a$ und aus dem vom Biege-werkzeug bestimmten Biegeradius $R_m$ (bezogen auf die Stabmittellinie) ohne Radiusaufweitung die Länge $G_n$ eines jeden geraden Abschnittes berechnet werden, und zwar für die geraden Stücke zwischen zwei Stabgeradenschnittpunkten und unter der vereinfachenden Annahme einer nicht vom Biegewinkel $\beta$ abhängenden Radiusaufweitung $r_a$ nach der Formel

$$(15) \quad Gn = Ln - (R_m + r_a)\tan(\beta_n/2)$$
$$- (R_m + r_a)\tan(\beta_{n+1}/2)$$

Der erste gerade Abschnitt des gebogenen Stabes hat keinen Vorgängerbogen und das letzte gerade Stück hat keinen Nachfolgebogen, so dass die Länge G1 des ersten geraden Stückes

$$(16) \quad G1 = L1 - (R_m + r_a) \tan (\beta_1/2)$$

und die Länge des letzten geraden Stückes

$$(17) \quad Gn = Ln - (R_m + r_a) \tan (\beta_{n-1}/2)$$

wird.

Daraus errechnet sich der Streckfaktor nach Gleichung (14) zu

$$(18) \quad \text{SF = (Gesamtlänge des Stabes vor dem Biegen – Summe aller geraden}$$
$$\text{Stücke Gn) / Summe der theoretischen Abwicklungen aller n-1 Bögen,}$$
$$\text{wobei die Summe aller theoretischen Abwicklungen } 2\pi \text{ x } (R_m + r_a) \text{ x}$$
$$\text{(Summe aller n-1 Soll-Biegewinkel } \beta_1 \text{ bis } \beta_{n-1}) / 360° \text{ ist.}$$

Eine höhere Genauigkeit wird beim Biegen eines Stabes, insbesondere eines Rohres, erreicht, wenn in den Gleichungen (15) bis (17) die Abhängigkeit der Radiusaufweitung $r_a$ vom Biegewinkel $\beta$ berücksichtigt wird, sodass für unterschiedliche Biegewinkel $\beta_n$ unterschiedliche Radiusaufweitungen $r_{an} = f(\beta_n)$ in die Gleichungen (15) bis (15) eingesetzt werden.

Die Streckung wird vorzugsweise für einen bestimmten Biegewinkel auf einen Einheits-Biegeradius normiert und für einen bestimmten Biegeradius auf einen Einheitsbiegewinkel normiert. Daraus kann dann für eine bestimmte Biegeaufgabe mit vorgegebenem Biegeradius $R_m$ und Biegewinkel $\beta$ die zu erwartende absolute Streckung errechnet werden. Außerdem lässt sich vorab errechnen, an welcher Position sich das hintere Ende des Stabes nach dem Biegen eines jeden einzelnen Bogens des Stabes befinden sollte. Diese Position kann durch den Weggeber, welcher mit der Vorschubeinrichtung gekoppelt ist, erfasst und dem Rechner der Biegemaschine zur Kontrolle übermittelt werden. Das hat den Vorteil, daß z.B. durch Schlupf verursachte Abweichungen von den erwarteten Positionen noch während der Bearbeitung des Stabes festgestellt werden können und dass bereits während des Biegevorganges eine Qualitätskontrolle erfolgen und vom Rechner für jeden einzelnen Stab festgehalten werden kann. Die Erfindung wird damit den Anforderungen gängiger Zertifizierungsnormen gerecht. Die Möglichkeit, die Positionen des hinteren Stabendes und der dort angreifenden Vorschubeinrichtung vorab genau ermitteln zu können, hat den weiteren Vorteil, dass bereits vorab ermittelt werden kann, ob die Vorschubeinrichtung beim Durchführen einer gegebenen Biegeaufgabe irgendwo kollidieren könnte.

Die Erfindung eignet sich besonders für das Zugumformungsbiegen von Rohren, kann aber auch auf das Biegen von massiven Rundstäben, Profilstäben und Hohlprofilstäben angewendet werden, welche hier zusammen mit Rohren als Stäbe bezeichnet sind.

Ausführungsbeispiele der Erfindung werden nachfolgend anhand der beigefügten schematischen Zeichnungen erläutert.

Figur 1    zeigt ein Rohr nach einem Biegevorgang, während es noch im Biegewerk- zeug und in der Vorschubeinrichtung gehalten ist und unter Spannung steht,

Figur 2    zeigt das Rohr aus Figur 1, welches von der Vorschubeinrichtung und vom Biegewiderlager entkoppelt ist,

Figur 3    zeigt das Rohr aus Figur 2, noch immer in die Spannvorrichtung einge- spannt, aber durch Verschwenken der Spannvorrichtung in eine Lage ver- schwenkt, in welcher der hintere Schenkel des Rohres parallel zu seiner ur- sprünglichen Lage, wie in Figur 1 angegeben, ausgerichtet ist, und

Figur 4 zeigt schematisch, wie eine Kennlinie, die für einen ausgewählten Stab die Abhängigkeit der Radiusaufweitung vom Biegewinkel angibt, linearisiert wer- den kann.

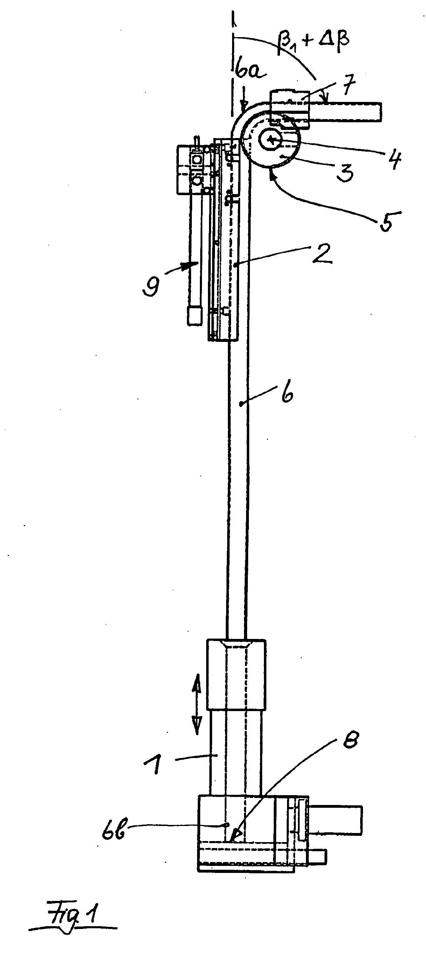

Figur 1 zeigt in einer Draufsicht eine Vorschubeinrichtung 1 einer Biegemaschine, ein Biegewiderlager 2, welches als geradlinige Gleitschiene ausgebildet ist, und ein Biegewerkzeug 3, welches um eine zur Zeichenebene senkrechte Achse 4, die Biegeachse, verschwenkbar ist. Das Biegewerkzeug 3 hat eine als Rotationsfläche ausgebildete Mantelfläche 5, welche sich über etwas mehr als einen Dreiviertelkreis erstreckt und im Radialschnitt eine konkave Kontur hat, welche dem Außendurchmesser des Rohres 6 angepasst ist. Die Rotationsfläche 5 geht tangential in eine Spannvorrichtung 7 über, bestehend aus einem Paar Klemmbacken, zwischen welchen das Rohr 6 fest eingespannt werden kann.

Zu Beginn des Biegevorgangs ist die Spannvorrichtung 7 parallel zum Biegewiderlager 2 ausgerichtet. Das Biegewiderlager 2 wird an das Rohr 6 angelegt, welches mit seinem hinteren Ende bis zu einem Anschlag 8 in der Vorschubeinrichtung 1 steckt, die sich auf einem Vorschubschlitten befinden kann.

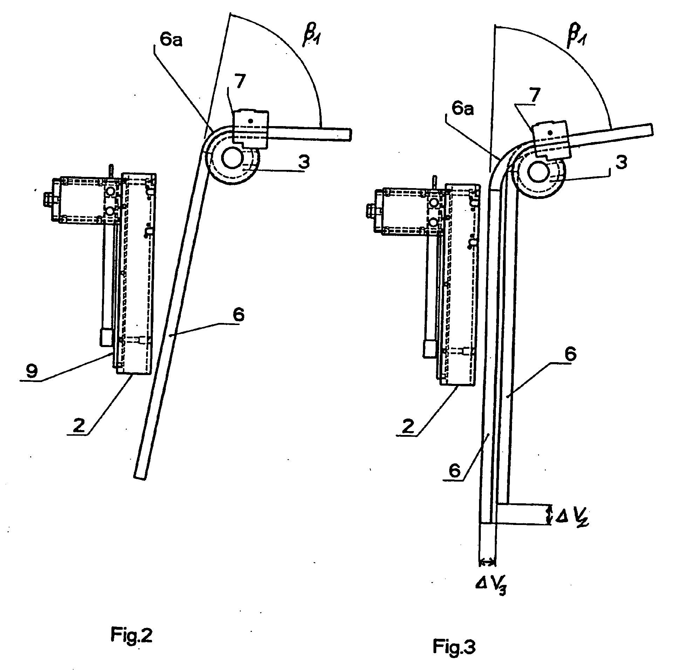

Das Rohr 6 wird durch Verschwenken des Biegewerkzeugs 3 mit der Spannvorrichtung 7 gebogen. Es zieht dabei den hinteren Abschnitt des Rohres 6 an dem Biegewiderlager 2 entlang und wickelt das Rohr 6 auf die Rotationsfläche 5 auf. Beim ersten Biegevorgang, dargestellt in Figur 1, kann zunächst der erforderliche Überbiegewinkel $\Delta\beta$ mit Hilfe eines Messlineals 9 bestimmt werden, welches mit dem Biegewiderlager 2 gekoppelt ist. Die Bestimmung des Überbiegewinkels $\Delta\beta$ ist in der EP 0 384 477 B1 beschrieben, worauf hiermit Bezug genommen wird. Ist der Überbiegewinkel $\Delta\beta$ bestimmt, dann wird der Schwenkwinkel des Biegewerkzeugs 3 um den Überbiegewinkel $\Delta\beta$ erhöht, um den gewünschten Soll-Biegewinkel $\beta_1$ zu erreichen. Figur 1 zeigt das Rohr 6 im überbogenen Zustand. Über die Lage, in welcher sich das hintere Ende 6b des Rohres 6 befindet, gibt ein Weggeber Auskunft, welcher mit der Vorschubeinrichtung 1 gekoppelt ist. Danach wird die Vorschubeinrichtung 1 zurückgezogen und vom Ende 6b des Rohres 6 entkoppelt. Das Biegewiderlager 2 wird quer zum hinteren Schenkel des Rohres 6 parallel zu sich selbst zurückgezogen und erlaubt eine Auffederung des Bogens 6a. Diesen Zustand zeigt die Figur 2. Der Bogen 6a des Rohres 6 ist nun spannungsfrei, sein Radius hat sich aufgeweitet. Der Winkel zwischen den beiden Rohrschenkeln hat sich vergrößert und beträgt jetzt $180°-\beta_1$.

Als nächstes wird das Biegewerkzeug 3 verschwenkt, um den hinteren Schenkel des Rohres 6 in eine Ausrichtung parallel zu seiner ursprünglichen Ausrichtung wie in Figur 1 und parallel zum Biegewiderlager 2 zu bringen. Diesen Zustand zeigt die Figur 3. In der Figur 3 ist zusätzlich die Lage eingezeichnet, die der hintere Rohrschenkel im Zustand wie in Figur 1 hatte. Infolge der Radiusaufweitung hat sich das hintere Ende 6b um die Strecke $\Delta V_2$ in Richtung gegen die Vorschubeinrichtung 1 verlagert. Diese Verlagerung kann mit Hilfe des Weggebers gemessen werden, welcher mit der Vorschubeinrichtung 1 gekoppelt ist, indem die Vorschubeinrichtung 1 bis zum Anschlag gegen das Ende 6b des Rohres 6 vorgeschoben wird und dieses in der gleichen Referenzposition - Anschlag 8 - aufnimmt, welche es in Figur 1 inne hatte. Die Differenz der Positionen der Vorschubeinrichtung 1 in Figur 1 und - nach dem erneuten Aufnehmen des Endes 6b des Rohres 2 - in Figur 3 ist die Strecke $\Delta V_2$. Daraus ergibt sich die Radiusaufweitung $r_a$, indem $\Delta V_2$ durch den Sinus des Biegewinkels $\beta_1$ geteilt wird.

Anhand der Figur 3 ist zu erkennen, dass die Lage des hinteren Schenkels des Rohres 6 nach dem Biegen und erneutem Ausrichten parallel zur ursprünglichen Lage wie in Figur 1 mit dieser nicht deckungsgleich ist. Der Abstand $\Delta V_3$, quer zum Biegewiderlager 2 bzw. quer zum hinteren Rohrschenkel gemessen, ist ein Maß für die Radiusaufweitung, welche man erhält, indem man $\Delta V_3$ durch $(1-\cos\beta_1)$ teilt. Verglichen mit dem theoretischen Fall ohne Radiusaufweitung wird der Vorschub des Rohres 6 zur nächsten Biegeposition um die Radiusaufweitung $r_a$, multipliziert mit dem Tangens des halben Biegewinkels $\beta_1$ des ersten Bogens 6a, sowie um die Radiusaufweitung $r_a$ multipliziert mit dem Tangens des halben Biegewinkels $\beta_2$ eines als Zweiten zu biegenden Bogens, verkürzt:

$$(19) \quad \Delta V = r_a * \tan \beta_1/2 + r_a * \tan \beta_2/2,$$

worin $\Delta V$ die zu berücksichtigende Verkürzung des Vorschubs ist. Soll die Abhängigkeit der Radiusaufweitung vom Biegewinkel berücksichtigt werden, wird aus der. Gleichung (17) die Gleichung

$$(20) \quad \Delta V = r_{a1} * \tan \beta_1/2 + r_{a2} * \tan \beta_2/2$$

worin $r_{a1}$ die zum Biegewinkel $\beta_1$ gehörende Radiusaufweitung und $r_{a2}$ die zum Biegewinkel $\beta_2$ gehörende Radiusauf-

weitung sind.

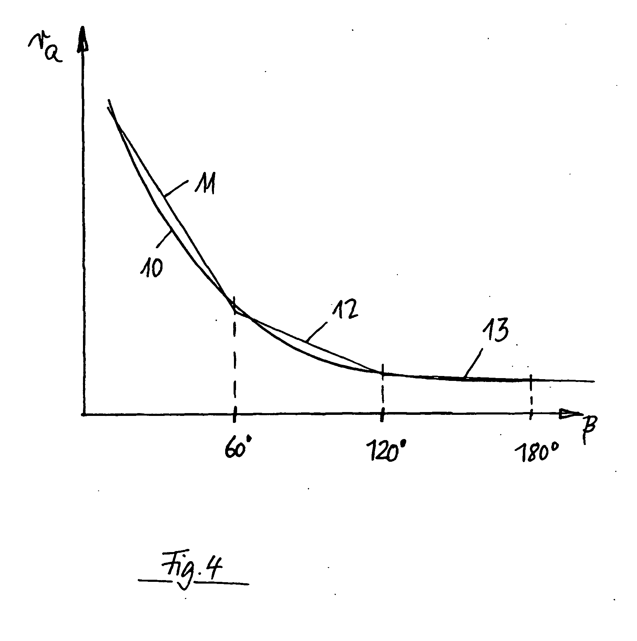

Figur 4 zeigt beispielhaft eine Kennlinie 10, welche die Abhängigkeit der Radiusaufweitung vom Biegewinkel für ein ausgewähltes Rohr darstellt. Auf der waagerechten Achse ist der Biegewinkel angegeben. Auf der senkrechten Achse ist die Radiusaufweitung in relativen Einheiten angegeben. Die Kurve soll lediglich schematisch einen typischen Verlauf der Kennlinie darstellen. Es handelt sich um eine fallende Kennlinie, welche Ähnlichkeit mit einer Hyperbel hat. Im erfindungsgemäßen Verfahren kann die Abhängigkeit der Radiusaufweitung $r_a$ vom Biegewinkel $\beta$ vereinfacht dadurch berücksichtigt werden, dass die Kennlinie 10 in drei Abschnitten 11, 12 und 13 linearisiert wird, indem die Kennlinie 10 im Bereich von 0° bis 60° durch eine steilere Gerade 11 angenähert wird, im Bereich von 60° bis 120° durch eine weniger steile Gerade 12 angenähert wird und im Bereich von 120° bis 180° durch eine sehr flache Gerade 13 angenähert wird. Die linearisierte Kennlinie kann in der Steuerung einer Rohrbiegemaschine gespeichert sein, so dass die Steuerung beim Biegen auf sie zugreifen kann. Für unterschiedliche Rohre oder Stäbe werden zweckmäßigerweise individuelle Kennlinien in linearisierter Form gespeichert.

**Patentansprüche**

1. Verfahren zum maschinellen Zugumformungsbiegen von Stäben (6), insbesondere von Rohren, durch Einspannen eines vorderen Abschnittes eines Stabes (6) in eine Spannvorrichtung (7) eines Biegewerkzeuges (3), welche um eine Achse (4) schwenkbar ist, Anlegen eines hinteren Abschnittes des Stabes (6) an ein in der Nachbarschaft des Biegewerkzeuges (3) angeordnetes Biegewiderlager (2), Verschwenken der Spannvorrichtung (7) um einen vorgewählten Winkel und in einer solchen Richtung, dass der hintere Abschnitt des Stabes (6) gezogen wird und gegen das Biegewiderlager (2) drückt, wobei bei einem Bogen (6a) eine Größe, die ein Maß für die durch das Zugumformungsbiegen hervorgerufene Radiusaufweitung des Bogens (6a) ist, gemessen und diese Größe oder eine davon abgeleitete Größe in einem Rechner gespeichert wird, **dadurch gekennzeichnet, dass** für folgende Biegevorgänge der gleichen Biegeaufgabe der Einfluss der Radiusaufweitung auf den Abstand benachbarter Stabgeradenschnittpunkte voneinander und/oder auf den Abstand zwischen den Stabenden und den ihnen benachbarten Stabgeradenschnittpunkten durch Kürzen der Längen der zwischen je zwei einander benachbarten Bögen (6a) und/oder durch Kürzen der Länge des Stabes um einen von der Radiusaufweitung abhängenden Betrag kompensiert wird.

2. Verfahren nach Anspruch 1, **dadurch gekennzeichnet, dass** die Größe, die ein Maß für die Radiusaufweitung des Bogens (6a) ist, gemessen wird, während sich der Stab (6) noch in der Biegemaschine befindet.

3. Verfahren nach Anspruch 1 oder 2, **dadurch gekennzeichnet, dass** der Einfluss der Radiusaufweitung bei einem geraden Endabschnitt des Stabes (6) kompensiert wird, indem dieser um den Betrag $r_a \cdot \tan(\beta/2)$ verkürzt wird, worin $r_a$ die durch Messung bestimmte Radiusaufweitung und $\beta$ der tatsächliche Biegewinkel des an den geraden Endabschnitt anschließenden Bogens (6a) ist.

4. Verfahren nach Anspruch 1, 2 oder 3, **dadurch gekennzeichnet, dass** der Einfluss der Radiusaufweitung bei einem geraden Zwischenabschnitt des Stabes (6) **dadurch** kompensiert wird, dass dieser um einen Betrag $r_a (\tan(\beta_1/2) + \tan(\beta_2/2))$ verkürzt wird, worin $r_a$ die durch Messung bestimmte Radiusaufweitung ist und $\beta_1$ und $\beta_2$ die tatsächlichen Biegewinkel der an den betreffenden geraden Stababschnitt angrenzenden Bögen sind.

5. Verfahren nach Anspruch 3 oder 4, **dadurch gekennzeichnet, dass** diese Art der Kompensation nur für Biegewinkel $\beta$, $\beta_1$, $\beta_2$ durchgeführt wird, die nicht größer als 170° sind.

6. Verfahren nach einem der vorstehenden Ansprüche, **dadurch gekennzeichnet, dass** die Radiusaufweitung $r_a$ bestimmt wird, wenn eine bestimmte Biegeaufgabe erstmalig durchgeführt wird.

7. Verfahren nach einem der vorstehenden Ansprüche, **dadurch gekennzeichnet, dass** die Radiusaufweitung $r_a$ bestimmt wird, wenn erstmals ein Bogen (6a) gebogen wird, der zu einer bestimmten Biegeaufgabe gehört.

8. Verfahren nach einem der Ansprüche 1 bis 7, **dadurch gekennzeichnet, dass** die Radiusaufweitung $r_a$ mit einer Vorschubeinrichtung (1) für den Stab (6) gemessen wird, welche mit einem Weggeber gekoppelt ist.

9. Verfahren nach Anspruch 8, **dadurch gekennzeichnet, dass** nach dem Biegen eines Bogens (6a) das Biegewiderlager (2) vom Stab (6) entfernt wird, die Spannvorrichtung (7) soweit zurückgeschwenkt wird, bis der hintere gerade Stababschnitt parallel zu seiner Ausgangslage vor dem Biegen liegt, dass die Lage des hinteren Endes des Stabes (6) gemessen und mit der Lage verglichen wird, die das hintere Stabende ohne eine Radiusaufweitung eingenommen hätte, und dass der Abstand dieser beiden Positionen, in axialer Richtung des Stabes (6) gemessen, durch den Sinus des Biegewinkels geteilt wird, um die Radiusaufweitung $r_a$ zu erhalten.

10. Verfahren nach einem der Ansprüche 1 bis 8, **dadurch gekennzeichnet, dass** zur Messung der Radiusaufweitung $r_a$ nach dem Biegen eines Bogens (6a) die Spannvorrichtung (7) mit dem eingespannten Stab (6) soweit zurückgeschwenkt wird, dass der hintere gerade Stababschnitt eine Lage parallel zu seiner Ausgangslage vor dem Biegen des Bogens (6a) einnimmt und dass dann der Abstand dieses hinteren geraden Abschnittes des Stabes (6) von seiner ursprünglichen Lage gemessen und mit einem vom Biegewinkel abhängigen Faktor multipliziert wird, um die Radiusaufweitung $r_a$ zu erhalten.

11. Verfahren nach Anspruch 10, **dadurch gekennzeichnet, dass** als Faktor $1/(1-\cos\beta)$ gewählt wird, worin $\beta$ der Soll-Biegewinkel ist.

12. Verfahren nach Anspruch 10 oder 11, **dadurch gekennzeichnet, dass** die Abstandsmessung mit Hilfe eines Längenmessgerätes (9) durchgeführt wird, welches mit dem Biegewiderlager (2) gekoppelt ist.

13. Verfahren nach einem der Ansprüche 1 bis 7, **dadurch gekennzeichnet, dass** die Radiusaufwietung $r_a$ bestimmt wird, indem nach dem Biegen eines Bogens (6a) die Spannvorrichtung (7) um den Überbiegewinkel $\Delta\beta$ zurückgeschwenkt, geöffnet und in der Spannvorrichtung (7) die Auffederung des Bogens (6a) gemessen wird.

14. Verfahren nach Anspruch 12, **dadurch gekennzeichnet, dass** die Auffederung des Bogens (6a) mit einem in die Spannvorrichtung (7) integrierten Messfühler gemessen wird.

15. Verfahren nach einem der Ansprüche 1 bis 7, **dadurch gekennzeichnet, dass** die Radiusaufweitung $r_a$ bestimmt wird, indem nach dem Biegen eines Bogens (6a) die Spannvorrichtung (7) geöffnet, in ihre Ausgangslage zurückgeschwenkt und der Stab (6) aus der Spannvorrichtung (7) heraus vorgeschoben wird zu einem an der Biegemaschine vorgesehenen Längenmessgerät, mit welchem der Abstand des Stabanfangs von dem ersten Stabgeradenschnittpunkt gemessen, die Differenz zur Länge des geraden Stababschnittes gebildet, der halbe Stabdurchmesser abgezogen und das Ergebnis durch den Tangens des halben Biegewinkels geteilt wird, um den aufgeweiteten Radius zu erhalten, der die Summe aus dem bekannten Sollradius und der gesuchten Radiusaufweitung ist.

16. Verfahren nach einem der vorstehenden Ansprüche, **dadurch gekennzeichnet, dass** der tatsächliche Biegeradius in der Biegeebene entweder auf der Bogeninnenseite oder auf der Bogenaußenseite ,mittels eines 3-Punkt-Messgerätes gemessen wird, welches die Kontur des Bogens (6a) an drei Punkten abtastet, dass aus der Länge der Sehne und aus der Höhe des Bogens (6a) über der Sehne der tatsächliche Innenradius bzw. Außenradius des Bogens (6a) berechnet, daraus durch Addieren des halben Stabdurchmessers bzw. durch Subtrahieren des halben Stabdurchmessers der tatsächliche Radius des Bogens (6a) bezogen auf die Stabmittellinie berechnet und als Radiusaufweitung $r_a$ die Differenz zum Sollbiegeradius gebildet wird.

17. Verfahren nach einem der Ansprüche 1 bis 7, **dadurch gekennzeichnet, dass** die Radiusaufweitung aus dem Überbiegewinkel $\Delta\beta$ abgeleitet wird.

18. Verfahren nach Anspruch 16, **dadurch gekennzeichnet, dass** als Radiusaufweitung die Größe

$$r_a = R_m \, (\Delta\beta/\beta)$$

bestimmt wird, worin $R_m$ der Soll-Radius des Bogens (6a) bezogen auf die Längsmittellinie des Stabes (6), $\beta$ der Soll - Biegewinkel und $\Delta\beta$ der Überbiegewinkel ist.

19. Verfahren nach Anspruch 17, **dadurch gekennzeichnet, dass** als Radiusaufweitung die Größe

$$r_a = R_m \, (\Delta\beta - k)/\beta$$

bestimmt wird, worin $R_m$ der Sollradius des Bogens (6a) bezogen auf die Längsmittellinie des Stabes (6), $\beta$ Soll-Biegewinkel, $\Delta\beta$ der Überbiegewinkel und k eine für den jeweiligen Stab (6) charakteristische Konstante ist.

20. Verfahren nach Anspruch 19, **dadurch gekennzeichnet, dass** als Konstante k der Grenzwinkel gewählt wird, bei dessen Überschreiten der Stab (6) beim Biegen bleibend verformt wird, wohingegen er beim Biegen um kleinere Winkel nur elastisch verformt wird und in seine Ausgangsgestalt zurückfedern kann.

21. Verfahren nach einem der vorstehenden Ansprüche, **dadurch gekennzeichnet, dass** zur Ermittlung der Radiusaufweitung und gegebenenfalls der Konstante k nur ein oder höchstens zwei Bögen (6a) gebogen und ausgewertet werden.

22. Verfahren nach Anspruch 21, **dadurch gekennzeichnet, dass** zur Ermittlung der Radiusaufweitung und gegebenenfalls der Konstante k ein einziger Bogen (6a) in zwei Schritten gebogen und das Ergebnis eines jeden der Schritte ausgewertet wird.

23. Verfahren nach einem der vorstehenden Ansprüche, **dadurch gekennzeichnet, dass** beim Biegen eines Bogens (6a) auch die beim Biegen auftretende Streckung des Stabes (6) bestimmt wird, und dass bei folgenden Biegevorgängen mit dem gleichen Stabtyp die für jeden in dem Stab (6) zu biegenden Bogen (6a) aus der einmal bestimmten Streckung zu erwartende Streckung bei der Bemessung der Länge des Stabes (6) berücksichtigt wird, indem die Länge des Stabes (6) von vornherein zusätzlich zu einer sich aus der Kompensation der Radiusaufweitung ergebenden Verkürzung auch noch um die Summe der zu erwartenden Streckungen verkürzt wird.

24. Verfahren nach Anspruch 23, **dadurch gekennzeichnet, dass** die Streckung bestimmt wird, während sich der Stab (6) noch in der Biegemaschine befindet.

25. Verfahren nach Anspruch 23 oder 24, **dadurch gekennzeichnet, dass** die Streckung mit Hilfe der Radiusaufweitung $r_a$ oder des Überbiegewinkels $\Delta\beta$ abgeleitet wird.

26. Verfahren nach Anspruch 23, 24 oder 25, **dadurch gekennzeichnet, dass** der Zahlenwert, welcher als Maß für die Streckung gespeichert wird, auf einen Einheits-Biegewinkel normiert wird.

27. Verfahren nach Anspruch 23, 24 oder 25, **dadurch gekennzeichnet, dass** der Zahlenwert, welcher als Maß für die Streckung gespeichert wird, auf einen Einheits-Biegeradius normiert wird.

28. Verfahren nach einem der Ansprüche 23 bis 27, **dadurch gekennzeichnet, dass** als absolute Streckung S die Größe

$$S = ((R_m \, 2\pi(\beta + \Delta\beta))/360) \; - \; \Delta V$$

oder

$$S = ((R_m + r_a) \, 2\pi\beta/360) - \Delta V$$

berechnet wird, worin
$\Delta V$ die Strecke ist, um welche das hintere Ende des Stabes (6) gezogen wird, wenn dieses mit dem Soll-Radius $R_m$, bezogen auf die Mittellinie des Stabes (6), um den Soll-Biegewinkel $\beta$ plus den Überbiegewinkel $\Delta\beta$ gebogen wird, gemessen vor der Rückfederung.

29. Verfahren nach einem der Ansprüche 23 bis 28, **dadurch gekennzeichnet, dass** das Verhältnis der tatsächlichen, entlang der Mittellinie des Stabes (6) gemessenen Länge eines Bogens (6a) mit dem Soll-Biegewinkel β und mit dem Soll-Radius Rm, in welchem eine Streckung stattgefunden hat, zur theoretischen Länge des gleichen Bogens (6a) ohne Annahme einer Streckung im Bogen (6a), als Streckfaktor SF

$$SF = (\Delta V \times 360°) / (2\pi(\beta + \Delta\beta)R_m)$$

oder

$$SF = (\Delta V \times 360°) / (2\pi\beta(R_m + r_a))$$

bestimmt und gespeichert wird, worin

$\Delta V$ die Strecke ist, um welche das hintere Ende des Stabes (6) gezogen wird, wenn dieses mit dem Soll-Radius $R_m$, bezogen auf die Mittellinie des Stabes (6), um den Soll-Biegewinkel β plus den Überbiegewinkel $\Delta\beta$ gebogen wird, gemessen vor der Rückfederung.

30. Verfahren nach einem der Ansprüche 23 bis 27, **dadurch gekennzeichnet, dass** das Verhältnis der tatsächlichen, entlang der Mittellinie des Stabes (6) gemessenen Länge eines Bogens (6a) mit dem Soll-Biegewinkel β und mit dem Soll-Radius $R_m$, in welchem eine Streckung stattgefunden hat, zur theoretischen Länge des gleichen Bogens (6a) ohne Annahme einer Streckung und ohne Annahme einer Radiusaufweitung, als Streckfaktor

$$SF_1 = (\Delta V \times 360°) / (2\pi\beta R_m)$$

bestimmt und gespeichert wird, worin $\Delta V$ die Strecke ist, um welche das hintere Ende des Stabes (6) gezogen wird, wenn dieses mit dem Soll-Radius $R_m$, bezogen auf die Mittellinie des Stabes (6), um den Soll-Biegewinkel β plus den Überbiegewinkel $\Delta\beta$ gebogen wird, gemessen vor der Rückfederung.

31. Verfahren nach einem der Ansprüche 23-27, **dadurch gekennzeichnet, dass** zur Bestimmung der Streckung eines gebogenen Stabes (6) dessen Länge vor dem Biegen, der Abstand seiner Stabgeradenschnittpunkte, der Abstand des Stabanfangs vom ersten Stabgeradenschnittpunkt, und der Abstand des Stabendes vom letzten Stabergeradenschnittpunkt bestimmt werden,
dass daraus mit Hilfe der schon bestimmten Radiusaufweitung und der vorgegebenen Soll-Biegeradien die Länge der geraden Stababschnitte berechnet wird, und dass daraus als Streckfaktor der Quotient aus der um die Länge aller geraden Stücke des Biegeteils verminderten anfänglichen Stablänge und aus der Summe der theoretischen Abwicklungen aller Bögen (6a) gebildet wird.

32. Verfahren nach einem der vorstehenden Ansprüche, **dadurch gekennzeichnet, dass** vereinfachend angenommen wird, dass die Radiusaufweitung ($r_a$) vom Biegewinkel (β) unabhängig ist.

33. Verfahren nach einem der Ansprüche 1-31, **dadurch gekennzeichnet, dass** bei der Kompensation des Einflusses der Radiusaufweitung ($r_a$) auf den Abstand benachbarter Stabgeradenschnittpunkte voneinander und/oder auf den Abstand zwischen den Stabenden und den ihnen benachbarten Stabgeradenschnittpunkten eine Abhängigkeit der Radiusaufweitung ($r_a$) von dem Biegwinkel (β) berücksichtigt wird.

34. Verfahren nach Anspruch 33, **dadurch gekennzeichnet, dass** die Abhängigkeit der Radiusaufweitung ($r_a$) vom Biegewinkel (β) vereinfachend als linear angenommen wird.

35. Verfahren nach Anspruch 34, **dadurch gekennzeichnet, dass** mehrere Bereiche von Biegewinkeln (β) gebildet werden, dass in jedem dieser Bereiche die Abhängigkeit der Radiusaufweitung ($r_a$) vom Biegewinkel (β) linearisiert wird und dass der lineare Zusammenhang zwischen der Radiusaufweitung ($r_a$) und dem Biegewinkel (β) in jedem einzelnen Biegewinkelbereich gleich, jedoch in verschiedenen Biegewinkelbereichen verschieden ist.

**36.** Verfahren nach Anspruch 35, **dadurch gekennzeichnet, dass** die Biegewinkel (β) in drei bis fünf Biegewinkelbereiche eingeteilt werden.

**37.** Verfahren nach Anspruch 36, **dadurch gekennzeichnet, dass**
ein erster Biegewinkelbereich die Winkel von 0° bis 60°,
ein zweiter Biegewinkelbereich die Winkel von 60° bis 120° und
ein dritter Biegewinkelbereich die Winkel von über 120° umfasst.

**38.** Verfahren nach einem der Ansprüche 33 bis 37, **dadurch gekennzeichnet, dass**
ein Bogen (6a) schrittweise gebogen wird,
und dass nach jedem Schritt eine Größe gemessen wird, die ein Maß für die Radiusaufweitung ist, welche bei dem im jeweiligen Schritt erreichten Biegewinkel auftiritt,
und dass diese Größe für jeden der Schritte unter dem bis zu ihm erreichten Biegewinkel registriert und bei nachfolgenden Biegevorgängen bereitgehalten wird, um für die Steuerung der Biegevorgänge darauf zugreifen zu können.

**39.** Verfahren nach Anspruch 38, **dadurch gekennzeichnet, dass** die Größe, die ein Maß für die Radiusaufweitung ist, für Zwischenwerte des Biegewinkels durch Interpolation aus den registrierten Größen ermittelt wird.

**Claims**

**1.** A method for the mechanical tensile bending of bars (6), in particular pipes, by clamping a front section of a bar (6) in a clamping device (7) of a bending tool (3), which can pivot about an axis (4),
placing a rear section of the bar (6) against a bending support (2) disposed in the vicinity of the bending tool (3),
pivoting the clamping device (7) through a preselected angle and in such a direction that the rear section of the bar (6) is drawn and presses against the bending support (2),
wherein a variable is measured for a curve (6a), which serves as a measure of the radial expansion of the curve (6a) produced by the tensile bending process, and this variable or a variable derived therefrom is stored in a computer,
**characterized in that** for subsequent bending operations having an identical bending objective, the effect of the radial expansion on the distance between adjacent straight-bar intersection points and/or the distance between the ends of the bar and straight-bar intersection points adjacent thereto is compensated by shortening the lengths between two respective adjacent curves (6a) and/or by shortening the length of the bar by an amount that is dependent on the radial expansion.

**2.** The method according to claim 1, **characterized in that** the variable that serves as a measure of the radial expansion of the curve (6a) is measured while the bar (6) is still situated in the bending machine.

**3.** The method according to claim 1 or 2, **characterized in that** the effect of the radial expansion is compensated in a straight end section of the bar (6) by shortening the latter by the amount $r_a \tan(\beta/2)$, where $r_a$ is the radial expansion determined by measurement, and β is the actual measure of the radial expansion of the curve (6a) adjacent to the straight end section.

**4.** The method according to claim 1, 2 or 3, **characterized in that** the effect of the radial expansion of a straight intermediate section of the bar (6) is compensated by shortening the latter by an amount $r_a (\tan(\beta_1/2) + \tan(\beta_2/2))$, where $r_a$ is the radial expansion determined by measurement, and β and $\beta_2$ are the actual bending angles of the curves adjacent to the applicable straight bar section.

**5.** The method according to claim 3 or 4, **characterized in that** this type of compensation is carried out only for bending angles β, $\beta_1$, $\beta_2$ that are not greater than 170°.

**6.** The method according to one of the preceding claims, **characterized in that** the radial expansion $r_a$ is determined when a certain bending operation is carried out for the first time.

**7.** The method according to one of the preceding claims, **characterized in that** the radial expansion $r_a$ is determined when a curve (6a) belonging to a certain bending operation is bent for the first time.

**8.** The method according to one of the claims 1 to 7, **characterized in that** the radial expansion $r_a$ is measured using

a feed device (1) for the bar (6), which is coupled to a displacement sensor.

9. The method according to claim 8, **characterized in that**, after a curve (6a) is bent, the bending support (2) is retracted from the bar (6), the clamping device (7) is pivoted back to the point where the rear straight-bar section extends parallel to the starting position thereof before the bending operation, the position of the rear end of the bar (6) is measured and compared to the position that the rear bar end would have assumed without radial expansion, and the distance between these two positions measured in the axial direction of the bar (6) is divided by the sine of the bending angle to obtain the radial expansion $r_a$.

10. The method according to one of the claims 1 to 8, **characterized in that**, to measure the radial expansion $r_a$ after a curve (6a) is bent, the clamping device (7) with the bar (6) clamped therein is pivoted back to the point where the rear straight-bar section assumes a position parallel to the starting position thereof before the curve (6a) was bent, and the distance of said rear linear section of the bar (6) from the original position thereof is then measured and multiplied by a factor that is dependent on the bending angle to obtain the radial expansion $r_a$.

11. The method according to claim 10, **characterized in that** $1/(1-\cos\beta)$ is selected as the factor, wherein $\beta$ is the target bending angle.

12. The method according to claim 10 or 11, **characterized in that** the distance is measured using a length-measuring device (9) which is coupled to the bending support (2).

13. The method according to one of the claims 1 to 7, **characterized in that** the radial expansion $r_a$ is determined **in that**, after a curve (6a) is bent, the clamping device (7) is pivoted back through the overbending angle $\Delta\beta$ and opened, and the spring-back of the curve (6a) is measured in the clamping device (7).

14. The method according to claim 12, **characterized in that** the spring-back of the curve (6a) is measured using a measurement probe integrated in the clamping device (7).

15. The method according to one of the claims 1 to 7, **characterized in that** the radial expansion $r_a$ is determined **in that**, after a curve (6a) is bent, the clamping device (7) is opened and pivoted back to the starting position thereof, and the bar (6) is pushed out of the clamping device (7) toward a length-measuring device provided on the bending machine, using which the distance between the start of the bar and the first straight-bar intersection point is measured, the difference from the length of the straight bar section is calculated, half of the bar diameter is subtracted, and the result is divided by the tangent of half of the bending angle to obtain the expanded radius which is the sum of the known target radius and the desired radial expansion.

16. The method according to one of the preceding claims, **characterized in that** the actual bending radius in the bending plane is measured either on the curve inner side or the curve outer side using a 3-point measuring device which samples the contour of the curve (6a) at three points, the actual inner radius or outer radius of the curve (6a) is calculated using the length of the chord and the height of the curve (6a) above the chord, adding half of the bar diameter or subtracting half of the bar diameter to calculate the actual radius of the curve (6a) relative to the bar center line, and calculating the difference from the target bending radius as the radial expansion $r_a$.

17. The method according to one of the claims 1 to 7, **characterized in that** the radial expansion is derived from the overbending angle $\Delta\beta$.

18. The method according to claim 16, **characterized in that** the following variable is determined as the radial expansion

$$r_a = R_m \, (\Delta\beta/\beta)$$

where $R_m$ is the target radius of the curve (6a) relative to the longitudinal center line of the bar (6), $\beta$ is the target bending angle, and $\Delta\beta$ is the overbending angle.

19. The method according to claim 17, **characterized in that** the following variable is determined as the radial expansion

$$r_a = R_m (\Delta\beta - k)/\beta$$

where $R_m$ is the target radius of the curve (6a) relative to the longitudinal center line of the bar (6), $\beta$ is the target bending angle, $\Delta\beta$ is the overbending angle, and k is a constant that is characteristic of the particular bar (6).

20. The method according to claim 19, **characterized in that** the neutral angle selected as constant k is that which, when exceeded, the bar (6) is permanently deformed when bent, but, when bent by smaller angles, is merely elastically deformed and can spring back to its original shape.

21. The method according to one of the preceding claims, **characterized in that**, to determine the radial expansion and, if necessary, the constant k, only one or, at most, two curves (6a) are bent and evaluated.

22. The method according to claim 21, **characterized in that**, to determine the radial expansion and, if necessary, the constant k, a single curve (6a) is bent in two steps, and the result of each of the steps is evaluated.

23. The method according to one of the preceding claims, **characterized in that**, when a curve (6a) is bent, the elongation of the bar (6) produced during bending is also determined, and in subsequent bending operations using the same bar type, the elongation to be expected based on the previously determined elongation is taken into account for each curve (6a) to be bent in the bar (6) in the measurement of the length of the bar (6) by shortening the length of the bar (6) by the sum of the elongations to be expected in addition to the shortening resulting previously from the compensation of the radial expansion.

24. The method according to claim 23, **characterized in that** the elongation is determined while the bar (6) is still situated in the bending machine.

25. The method according to claim 23 or 24, **characterized in that** the elongation is derived using the radial expansion $r_a$ or the overbending angle $\Delta\beta$.

26. The method according to claim 23, 24, or 25, **characterized in that** the numerical value which is stored as a measurement of the elongation is normalized to a unit bending angle.

27. The method according to claim 23, 24, or 25, **characterized in that** the numerical value which is stored as a measurement of the elongation is normalized to a unit bending radius.

28. The method according to one of the claims 23 to 27, **characterized in that** the following variables are calculated as absolute elongation S

$$S = ((R_m\, 2\pi(\beta+\Delta\beta))/360) - \Delta V$$

or

$$S = ((R_m + r_a)\, 2\pi\beta/360) - \Delta V$$

where
$\Delta V$ is the distance by which the rear end of the bar (6) is drawn when it is bent with the target radius $R_m$, relative to the center line of the bar (6), through the target bending angle $\beta$ plus the overbending angle $\Delta\beta$, measured before spring-back.

29. The method according to one of the claims 23 to 28, **characterized in that** the ratio of the actual length of a curve (6a) measured along the center line of the bar (6) and having the target bending angle $\beta$ and the target radius $R_m$, in which elongation took place, to the theoretical length of the same curve (6a) without assuming elongation in the curve (6a) is determined and stored as elongation factor SF

$$SF = (\Delta V \times 360°) / (2\pi(\beta+\Delta\beta)R_m)$$

or

$$SF = (\Delta V \times 360°) / (2\pi\beta(R_m+r_a))$$

where
$\Delta V$ is the distance by which the rear end of the bar (6) is drawn when it is bent with the target radius $R_m$, relative to the center line of the bar (6), through the target bending angle $\beta$ plus the overbending angle $\Delta\beta$ measured before spring-back.

30. The method according to one of the claims 23 to 27, **characterized in that** the ratio of the actual length of a curve (6a) measured along the center line of the bar (6) and having the target bending angle $\beta$ and the target radius Rm, in which elongation took place, to the theoretical length of the same curve (6a) without assuming elongation in the curve (6a) or radial expansion is determined and stored as elongation factor

$$SF_1 = (\Delta V \times 360°) / (2\pi\beta R_m)$$

where
$\Delta V$ is the distance by which the rear end of the bar (6) is drawn when it is bent with the target radius $R_m$, relative to the center line of the bar (6), through the target bending angle $\beta$ plus the overbending angle $\Delta\beta$ measured before spring-back.

31. The method according to one of the claims 23-27, **characterized in that**, to determine the elongation of a curved bar (6), the following are determined: the length thereof before bending, the distance between the straight-bar intersection points thereof, the distance between the start of the bar and the first straight-bar intersection point, and the distance between the end of the bar and the last straight-bar intersection point, the length of the straight bar sections is calculated on the basis of the previously determined radial expansion and the specified target bending radii, and, depending thereon, the quotient of the initial bar length reduced by the length of all straight sections of the part to be bent and the sum of the theoretical developments of all curves (6a) is calculated as the elongation factor.

32. The method according to one of the preceding claims, **characterized in that** it is assumed for simplicity that the radial expansion ($r_a$) is independent of the bending angle ($\beta$).

33. The method according to one of the claims 1-31, **characterized in that** a dependence of the radial expansion ($r_a$) on the bending angle ($\beta$) is taken into account in the compensation of the effect of the radial expansion ($r_a$) on the distance between adjacent straight-bar intersection points and/or the distance between the bar ends and the straight-bar intersection points adjacent thereto.

34. The method according to claim 33, **characterized in that** it is assumed for simplicity that the dependence of the radial expansion ($r_a$) on the bending angle ($\beta$) is linear.

35. The method according to claim 34, **characterized in that** a plurality of ranges of bending angles ($\beta$) is defined, the dependence of the radial expansion ($r_a$) on bending angle ($\beta$) is linearized in each of these ranges, and the linear correlation between the radial expansion ($r_a$) and the bending angle ($\beta$) is identical in each individual bending-angle range, but differs in various bending-angle ranges.

**36.** The method according to claim 35, **characterized in that** the bending angle (β) is divided into three to five bending-angle ranges.

**37.** The method according to claim 36, **characterized in that**
a first bending-angle range encompasses the angles 0° to 60°,
a second bending-angle range encompasses the angles 60° to 120° and
a third bending-angle range encompasses angles greater than 120°.

**38.** The method according to one of the claims 33 to 37, **characterized in that** a curve (6a) is bent in stages, and a variable is measured after each stage, which is a measure of the radial expansion that occurs at the bending angle achieved in the particular stage, and this variable is recorded for each of the stages under the bending angle achieved up to that point, and is kept available during subsequent bending operations so that it can be accessed to control the bending operations.

**39.** The method according to claim 38, **characterized in that** the variable that serves as a measure of the radial expansion is determined for intermediate values of the bending angle by interpolation of the registered variables.

**Revendications**

**1.** Procédé pour le cintrage de déformation par traction à la machine de barres (6), en particulier de tuyaux, par

- serrage d'une section antérieure d'une barre (6) dans un dispositif de serrage (7) d'un outil de cintrage (3), pouvant pivoter autour d'un axe (4),
- application d'une section postérieure de la barre (6) sur un contre-appui de cintrage (2) disposé dans le voisinage de l'outil de cintrage (3),
- pivotement du dispositif de serrage (7) autour d'un angle présélectionné et dans une direction, de manière à ce que la section postérieure de la barre (6) soit tirée et appuie sur le contre-appui de cintrage (2),
- dans lequel une dimension d'un arc (6a), qui constitue une mesure pour l'agrandissement de rayon produit par le cintrage de déformation par traction, est mesurée, et cette dimension ou une dimension dérivée de celle-ci est enregistrée dans un ordinateur,

**caractérisé en ce que**, pour les opérations de cintrage suivantes de la même tâche de cintrage, l'influence de l'agrandissement de rayon sur l'écart entre des points d'intersection voisins et/ou sur l'écart entre les extrémités de barre et les points d'intersection voisins des droites de barre est compensée par un raccourcissement des longueurs de deux arcs (6a) voisins et/ou un raccourcissement de la longueur de la barre, d'une quantité dépendante de l'agrandissement de rayon.

**2.** Procédé selon la revendication 1, **caractérisé en ce que** la dimension, qui est une mesure pour l'agrandissement du rayon de l'arc (6a), est mesurée pendant que la barre (6) se trouve encore dans la machine de cintrage.

**3.** Procédé selon la revendication 1 ou 2, **caractérisé en ce que** pour une section terminale droite de la barre (6), l'influence de l'agrandissement de rayon est compensée en raccourcissant celle-ci d'une quantité $r_a \cdot \tan(\Box/2)$, où $r_a$ est l'agrandissement de rayon déterminé par le mesurage et $\Box$ est l'angle de fléchissement réel de l'arc (6a) suivant la section terminale droite.

**4.** Procédé selon la revendication 1, 2 ou 3, **caractérisé en ce que** pour une section terminale droite de la barre (6), l'influence de l'agrandissement de rayon est compensée en raccourcissant celle-ci d'une quantité $r_a (\tan(\Box_1/2) + \tan(\Box_2/2))$, où $r_a$ est l'agrandissement de rayon déterminé par le mesurage, et $\Box_1$ et $\Box_2$ sont les angles de fléchissement réels des arcs adjacents à la section de barre droite concernée.

**5.** Procédé selon la revendication 3 ou 4, **caractérisé en ce que** ce type de compensation n'est valable que pour des angles de fléchissement $\Box$, $\Box_1$, $\Box_2$ inférieurs à 170°.

**6.** Procédé selon l'une des revendications précédentes, **caractérisé en ce que** l'agrandissement de rayon $r_a$ est déterminé lorsqu'une certaine tâche de cintrage est exécutée pour la première fois.

**7.** Procédé selon l'une des revendications précédentes, **caractérisé en ce que** l'agrandissement de rayon $r_a$ est

déterminé lorsqu'un arc (6a) associé à la tâche de cintrage concernée est cintré pour la première fois.

8. Procédé selon l'une des revendications 1 à 7, **caractérisé en ce que** l'agrandissement de rayon $r_a$ est mesuré avec un dispositif d'avancement (1) pour la barre (6), qui est accouplé avec un indicateur de trajet.

9. Procédé selon la revendication 8, **caractérisé en ce qu'**après le cintrage d'un arc (6a), le contre-appui de cintrage (2) est éloigné de la barre (6), le dispositif de serrage (7) est pivoté en arrière jusqu'à ce que la section droite postérieure de la barre soit parallèle à sa position initiale avant le cintrage, **en ce que** la position de la section postérieure de la barre (6) est mesurée et comparée avec la position que l'extrémité arrière de la barre aurait adoptée en l'absence d'un agrandissement de rayon, et **en ce que** l'écart entre ces deux positions, pris dans le sens axial de la barre (6), est divisé par le sinus de l'angle de fléchissement, afin de maintenir l'agrandissement de rayon $r_a$.

10. Procédé selon l'une des revendications 1 à 8, **caractérisé en ce que** pour le mesurage de l'agrandissement de rayon ra après le cintrage de l'arc (6a), le dispositif de serrage (7) est pivoté en arrière avec la barre (6) serrée, jusqu'à ce que la section droite postérieure de la barre (6) prenne une position parallèle à sa position initiale avant le cintrage de l'arc (6a), et ce que l'écart de cette section droite postérieure de la barre (6) est ensuite mesuré à partir de sa position initiale et multiplié par un facteur dépendant de l'angle de fléchissement, afin d'obtenir l'agrandissement de rayon $r_a$.

11. Procédé selon la revendication 10, **caractérisé en ce que** le facteur choisi est $1/(1-\cos\beta)$, où $\beta$ est l'angle de fléchissement de consigne.

12. Procédé selon la revendication 10 ou 11, **caractérisé en ce que** l'écart est mesuré à l'aide d'un appareil de mesure de la longueur (9), qui est accouplé avec le contre-appui de cintrage (2).

13. Procédé selon l'une des revendications 1 à 7, **caractérisé en ce que** l'agrandissement de rayon $r_a$ est déterminé en pivotant vers l'arrière, d'un angle de surfléchissement $\Delta\beta$, et en ouvrant le dispositif de serrage (7), suite au cintrage de l'arc (6a), et en mesurant le déploiement de l'arc (6a) dans le dispositif de serrage (7).

14. Procédé selon la revendication 12, **caractérisé en ce que** le déploiement de l'arc (6a) est mesuré avec une sonde intégrée dans le dispositif de serrage (7).

15. Procédé selon l'une des revendications 1 à 7, **caractérisé en ce que** l'agrandissement de rayon $r_a$ est déterminé en ouvrant le dispositif de serrage (7) suite au cintrage de l'arc (6a), en le refaisant pivoter vers sa position initiale, et en poussant la barre (6) hors du dispositif de serrage (7), vers un appareil de mesure de longueur prévu sur la machine de cintrage, avec lequel est mesuré l'écart entre le commencement de la barre et le premier point d'intersection de la droite de la barre, la différence par rapport à la longueur de la section droite de la barre est formée, le demi-diamètre de la barre est soustrait, et le résultat est divisé par la tangente du demi-angle de fléchissement, pour obtenir le rayon agrandi, qui est la somme du rayon de consigne connu et de l'agrandissement de rayon recherché.

16. Procédé selon l'une des revendications précédentes, **caractérisé en ce que** le rayon de fléchissement réel dans le plan de cintrage est mesuré soit du côté intérieur de l'arc, soit du côté extérieur de l'arc, au moyen d'un appareil de mesure en 3 points, qui sonde le contour de l'arc (6a) en trois points, **en ce que** le rayon interne ou externe réel de l'arc est calculé à partir de la longueur de la corde et de la hauteur de l'arc (6a) au-dessus de la corde, **en ce que** le rayon réel de l'arc (6a) par rapport à la ligne médiane de la barre est ensuite calculé en y ajoutant la moitié du diamètre de barre ou en déduisant la moitié du diamètre de barre, et **en ce que** la différence par rapport au rayon de fléchissement théorique est obtenue comme étant l'agrandissement de rayon $r_a$.

17. Procédé selon l'une des revendications 1 à 7, **caractérisé en ce que** l'agrandissement de rayon est dérivé de l'angle de surfléchissement $\Delta\beta$.

18. Procédé selon la revendication 16, **caractérisé en ce que** pour l'agrandissement de rayon ra, la dimension

$$r_a = R_m \ (\Delta\beta/\beta)$$

est déterminée, où $R_m$ est le rayon théorique de l'arc (6a) rapporté à la ligne médiane longitudinale de la barre (6), β est l'angle de fléchissement théorique et Δβ est l'angle de surfléchissement.

**19.** Procédé selon la revendication 17, **caractérisé en ce que** pour l'agrandissement de rayon, la dimension

$$r_a = R_m (\Delta\beta - k) / \beta$$

est déterminée, où $R_m$ est le rayon théorique de l'arc (6a) rapporté à la ligne médiane longitudinale de la barre (6), β est l'angle de fléchissement théorique, Δβ est l'angle de surfléchissement et k est une caractéristique constante pour la barre (6) en question.

**20.** Procédé selon la revendication 19, **caractérisé en ce que** l'angle limite au dépassement duquel la barre (6) est durablement déformée lors du cintrage, est choisi en tant que constante k, tandis qu'elle est déformée seulement élastiquement ou reprend sa forme initiale lors d'un cintrage avec des angles plus petits.

**21.** Procédé selon l'une des revendications précédentes, **caractérisé en ce que** pour déterminer l'agrandissement de rayon et, le cas échéant, la constante k seulement un ou au maximum deux arcs sont cintrés et evalués.

**22.** Procédé selon la revendication 21, **caractérisé en ce que** pour la détection de l'agrandissement de rayon et le cas échéant de la constante k, un seul arc (6a) est cintré en deux étapes, et le résultat de chacune des étapes est évalué.

**23.** Procédé selon l'une des revendications précédentes, **caractérisé en ce que** lors du cintrage d'un arc (6a), l'étirement de la barre (6) produit lors du cintrage est également déterminé, et **en ce que** lors des opérations de cintrage suivantes avec des types de barres similaires, l'étirement attendu pour chaque arc (6a) à cintrer dans la barre (6), à partir de l'étirement déterminé la première fois, est pris en compte dans la mesure de la longueur de la barre (6), en raccourcissant dès le départ la longueur de la barre (6), de l'équivalent de la somme des étirement attendus, en plus de son raccourcissement produit à partir de la compensation de l'agrandissement de rayon.

**24.** Procédé selon la revendication 23, **caractérisé en ce que** l'étirement est déterminé pendant que la barre (6) se trouve encore dans la machine de cintrage.

**25.** Procédé selon la revendication 23 ou 24, **caractérisé en ce que** l'étirement est obtenu à l'aide de l'agrandissement de rayon $r_a$ ou de l'angle de surfléchissement Δβ.

**26.** Procédé selon la revendication 23, 24 ou 25, **caractérisé en ce que** la valeur numérique enregistrée comme mesure pour l'étirement est normée sur un angle de fléchissement unitaire.

**27.** Procédé selon la revendication 23, 24 ou 25, **caractérisé en ce que** la valeur numérique enregistrée comme mesure pour l'étirement est normée sur un rayon de fléchissement unitaire.

**28.** Procédé selon l'une des revendications 23 à 27, **caractérisé en ce que** pour l'étirement absolu S, la dimension

$$S = ((R_m 2\pi(\beta + \Delta\beta)) / 360) - \Delta V$$

ou

$$S = ((R_m + ra) 2\pi\beta / 360) - \Delta V$$

est calculée, où

ΔV est le trajet sur lequel est tirée l'extrémité arrière de la barre (6), lorsque celle-ci est fléchie de l'angle de fléchissement théorique β plus de l'angle de surfléchissement Δβ, avec le rayon théorique $R_m$ rapporté à la ligne médiane de la barre (6), mesuré avant le fléchissement retour.

29. Procédé selon l'une des revendications 23 à 28, **caractérisé en ce que** le rapport entre la longueur réelle d'un arc (6a), mesurée le long de la ligne médiane de la barre (6), avec l'angle de fléchissement théorique β et avec le rayon théorique Rm, dans lequel a eu lieu l'étirement, et la longueur théorique du même arc (6a) sans étirement dans l'arc (6a), est déterminé et enregistré comme facteur d'étirement SF

$$SF = (\Delta V \times 360°) / (2\pi(\beta+\Delta\beta)R_m)$$

ou

$$SF = (\Delta V \times 360°) / (2\pi\beta(R_m+r_a)$$

où

ΔV est le trajet sur lequel est tirée l'extrémité arrière de la barre (6), lorsque celle-ci est fléchie de l'angle de fléchissement théorique β plus de l'angle de surfléchissement Δβ, avec le rayon théorique $R_m$ rapporté à la ligne médiane de la barre (6), mesuré avant le fléchissement retour.

30. Procédé selon l'une des revendications 23 à 27, **caractérisé en ce que** le rapport entre la longueur réelle d'un arc (6a), mesurée le long de la ligne médiane de la barre (6), avec l'angle de fléchissement théorique β et avec le rayon théorique $R_m$, dans lequel a eu lieu l'étirement, et la longueur théorique du même arc (6a) sans étirement dans l'arc (6a) et sans agrandissement de rayon, est déterminé et enregistré comme facteur d'étirement

$$SF1 = (\Delta V \times 360°) / (2\pi\beta R_m)$$

où ΔV est le trajet sur lequel est tirée l'extrémité arrière de la barre (6), lorsque celle-ci est fléchie de l'angle de fléchissement théorique β plus de l'angle de surfléchissement Δβ, avec le rayon théorique Rm rapporté à la ligne médiane de la barre (6), mesuré avant le fléchissement retour.

31. Procédé selon l'une des revendications 23 à 27, **caractérisé en ce que** pour la détermination de l'étirement d'une barre (6) cintrée, la longueur de celui-ci avant le cintrage, l'écart entre ses points d'intersection de la droite de la barre, l'écart entre le début de barre et le premier point d'intersection des droites de barre, et l'écart entre la fin de barre et le point d'intersection des droites de barre sont déterminés, **en ce qu'**à partir de là, à l'aide de l'agrandissement de rayon déjà déterminé et des rayons de fléchissement théoriques, la longueur des sections droites de la barre est calculée, et **en ce qu'**à partir de là, en tant que facteur d'étirement, un quotient est formé à partir de longueur de barre initiale réduite de la longueur de toutes les parties droites de la pièce cintrée, et à partir de la somme des développements théoriques de tous les arcs (6a).

32. Procédé selon l'une des revendications précédentes, **caractérisé en ce qu'**il est supposé de manière simplifiée que l'agrandissement de rayon ($r_a$) est indépendant de l'angle de fléchissement (β).

33. Procédé selon l'une des revendications 1 à 31, **caractérisé en ce que** lors de la compensation de l'influence de l'agrandissement de rayon ($r_a$) sur l'écart entre des points d'intersection voisins et/ou sur l'écart entre les extrémités de barre et les points d'intersection voisins des droites de la barre, une dépendance de l'agrandissement de rayon ($r_a$) par rapport à l'angle de fléchissement (β) est prise en compte.

34. Procédé selon la revendication 33, **caractérisé en ce que** la dépendance de l'agrandissement de rayon (ra) par rapport à l'angle de fléchissement (β) est supposée être linéaire, pour simplifier.

**35.** Procédé selon la revendication 34, **caractérisé en ce que** plusieurs régions sont formées par des angles de fléchissement (β), **en ce que** dans chacune de ces régions, la dépendance de l'agrandissement de rayon (ra) par rapport à l'angle de fléchissement (β) est linéarisée, et **en ce que** la dépendance linéaire entre l'agrandissement de rayon ($r_a$) et l'angle de fléchissement (β) est identique dans chacune des différentes régions d'angle de fléchissement, mais différente dans les régions d'angle de fléchissement différentes.

**36.** Procédé selon la revendication 35, **caractérisé en ce que** l'angle de fléchissement (β) est divisé en trois à cinq régions d'angle de fléchissement.

**37.** Procédé selon la revendication 36, **caractérisé en ce que**
une première région d'angle de fléchissement comprend les angles de 0° à 60°,
une deuxième région d'angle de fléchissement comprend les angles de 60° à 120°, et
une troisième région d'angle de fléchissement comprend les angles de plus de 120°.

**38.** Procédé selon l'une des revendications 33 à 37, **caractérisé en ce qu'**un arc (6a) est cintré en plusieurs étapes, et **en ce qu'**après chaque étape, une dimension est mesurée, qui est une mesure pour l'agrandissement de rayon, apparaissant dans l'angle de fléchissement atteint dans chacune des étapes, et **en ce que** cette dimension est enregistrée pour chacune des étapes, sous l'angle de fléchissement atteint jusque là, et tenu prêt pour les opérations de cintrage suivantes, afin de pouvoir l'utiliser pour commander les opérations de cintrage.

**39.** Procédé selon la revendication 38, **caractérisé en ce que** la dimension, qui est une mesure pour l'agrandissement de rayon, est calculée pour des valeurs intermédiaires de l'angle de fléchissement, par interpolation à partir des grandeurs enregistrées.

$\beta_1 + \Delta\beta$

*Fig 1*

Fig.2

Fig.3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19706470 A1
- EP 0384477 A

- EP 0384477 B1